# EUROPEAN PATENT SPECIFICATION

(11) **EP 3 725 668 B1**
(45) Date of publication and mention of the grant of the patent: **18.09.2024**
(21) Application number: 20170050.7
(22) Date of filing: 17.04.2020
(51) Int. Cl.: B63H 21/17, H01M 8/18, B63B 35/44

(54) **AN ENERGY STORAGE PONTOON, A SHIP, A SHIPPING SYSTEM AND A METHOD FOR OPERATING THE SHIPPING SYSTEM**
ENERGIESPEICHERPONTON, SCHIFF, SCHIFFFAHRTSSYSTEM UND VERFAHREN ZUM BETREIBEN DES SCHIFFFAHRTSSYSTEMS
PONTON DE STOCKAGE D'ÉNERGIE, NAVIRE, SYSTÈME DE TRANSPORT ET PROCÉDÉ DE FONCTIONNEMENT DU SYSTÈME DE TRANSPORT

(30) Priority: 18.04.2019 NL 2022980
(43) Date of publication of application: 21.10.2020
(73) Proprietor: Lamaxan Holding B.V., 6681 DZ Bemmel (NL)
(72) Inventor: VAN MEEGEN, Antonius Adrianus, 6681 DZ Bemmel (NL); VAN MEEGEN, Laurentius Theodorus Johannes Antonius, 6681 DZ Bemmel (NL)
(74) Representative: V.O.

(56) References cited:
- AU-A4- 2011 101 353
- CN-A- 101 257 121
- CN-A- 108 565 486
- KR-A- 20170 092 783
- KR-A- 20180 104 354

## Description

### FIELD

The invention relates to a shipping system including an energy storage pontoon and a ship as well as to a method for the operating of the shipping system.

### BACKGROUND

Ships that are driven by electric motors are known. These ships are generally provided with batteries which have to be recharged regularly and which, of course, have a limited capacity. Recharging such large batteries is time consuming and that is why electrically driven ships have hardly gained acceptance in professional shipping so far. To solve this problem, proposals have been made to work with exchangeable batteries, for example batteries which are accommodated in a container, allowing a battery container to be rapidly exchanged in a simple manner when the ship lies by the quay. The battery container can then, while on the quay, be recharged and the ship can continue on its way directly with a recharged battery container which has been placed on or in the ship again. While this solution already alleviates a large part of the issues, there are still disadvantages associated with it as well. For example, on the quay, a considerable infrastructure needs to be constructed for storing and transporting sufficient battery containers. Moreover, a multiplicity of electric terminals need to be arranged on the quay to enable the various battery containers to be connected with them. Constructing such an infrastructure onshore entails a prolonged permit procedure and large investments.

KR20170092783 relates to a ship of modular construction which is provided with a first block and a second block each containing an electrolyte tank. Further, the ship is provided with a block which is provided with a flow battery and a screw propeller. This drive block is detachably connectible with the first and the second block.

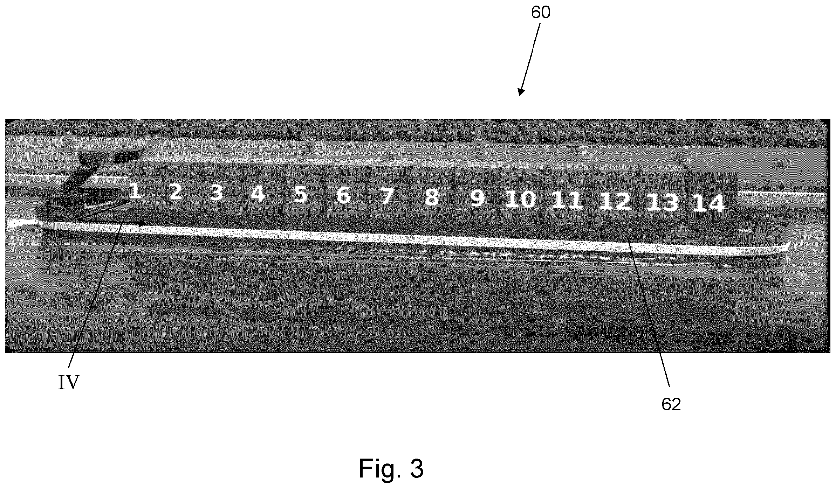

AU2011101353 discloses in Figure 3 a system of a number of ships which includes tanks with anolyte and catholyte. These ships sail back and forth between an oil rig and the shore. At the oil rig lies a ship which is provided with cell stacks which are connected to a gas turbine generator with which waste gas from the oil rig is converted into electricity and with which the anolyte and the catholyte can be electrically charged. Onshore, there is also a so-called onshore discharge cell stack which anolyte and catholyte from the ship are passed through for generating electric power which is fed into the public electricity grid or a load.

KR20180104354 relates to a ship which is provided with electrolyte tanks movable on rails, for these tanks to serve as ballast tanks with which the ship can be trimmed. In this publication it is described that gases that are released on the ship, for example in oil storage tanks, can be converted in a fuel cell into electricity which can be supplied to the public electricity grid. Also, power may be drawn from this public electricity grid to charge the electrolytes again via the stacks.

CN108565486 describes a ship which is provided with electrolyte tanks. When the electrolytes in them are discharged, they can be pumped from the tanks to a shore-based charging platform. The electrolytes are therefore not recharged onboard the ship but onshore in an installation which is on shore to that end.

### SUMMARY

The object of the invention is to provide a solution to the above-described issues. To this end, the invention provides shipping system according to claim 1.

One element of the shipping system of the invention is at least one energy storage pontoon which comprises a floating pontoon shell with:
- at least one anolyte tank for holding liquid anolyte;
- at least one catholyte tank for holding liquid catholyte;
The energy storage pontoon further comprises at least one flow battery which includes:
- an anode chamber provided with an anode;
- a cathode chamber provided with a cathode;
- a membrane which separates the anode chamber from the cathode chamber;
The energy storage pontoon is further provided with:
- an anolyte fill opening via which the at least one anolyte tank is fillable with a liquid, discharged anolyte;
- a catholyte fill opening via which the at least one catholyte tank is fillable with a liquid, discharged catholyte;
- an anolyte delivery provision via which charged anolyte can be delivered from the at least one anolyte tank; and
- a catholyte delivery provision via which charged catholyte can be delivered from the at least one catholyte tank;
- at least one anolyte line which connects the at least one anolyte tank with the anode chamber;
- at least one catholyte line which connects the at least one catholyte tank with the cathode chamber;
- at least one anolyte pump which is included in the anolyte line and with the aid of which anolyte is pumpable from the at least one anolyte tank via the anode chamber of the flow battery to the at least one anolyte tank;
- at least one catholyte pump which is included in the catholyte line and with the aid of which catholyte is pumpable from the at least one catholyte tank via the cathode chamber of the flow battery to the at least one catholyte tank; and
- at least one electric connection for electrically connecting the flow battery with an electric source and/or electric load; and
- the at least one energy storage pontoon is connected to an electric source via the at least one electric connection, the electric source for example being the electricity grid, or a power station.

Such an energy storage pontoon can in fact be placed anywhere without prolonged permit procedures needing to be traversed for this. None of the publications mentioned above in the background section describes a pontoon for storing anolyte and catholyte and for electrically charging or electrically discharging the anolyte and catholyte with the aid of a flow battery, while the pontoon is connected with the quay only via a power cable and for the rest no liquid lines or like connections with the shore are necessary. As is well known, a pontoon is a floating shell which is not provided with a drive of its own such as a screw driven by a motor. Pontoons are generally conveyed to a point of destination with the aid of a towboat or like vessel and moored there.

KR'783 and KR'354 describe ships - no pontoons - where charging the electrolytes takes place on the ship. In consequence, for a longer time, the ship is not available for transporting cargo. AU'353 en CN'486 describe ships that are provided with facilities for filling or emptying the electrolyte tanks present therein by pumping. However, the electric charging or discharging of the electrolytes takes place on shore. That, accordingly, requires an extensive installation on shore, which moreover cannot be realized just anywhere. This is due both to practical considerations based on technical problems - not everywhere is there a suitable quay on which the cell stacks can be placed - and to issues connected with permits - in many places no permit will be issued to construct a stack onshore. It is to be borne in mind here that a cell stack with a fair capacity takes up a substantial floor surface. Moreover, the processing, such as the pumping, of electrolytes onshore requires special safety measures in view of the environment.

By means of the pontoon of the shipping system according to the invention, the only thing that needs to be provided from the shore is an electric cable which is connectible to the electric connection of the energy storage pontoon. It is obviously preferred for the electric cable to be connected with an electric source of the sustainable type, such as, for example, a windmill park, a photovoltaic source, such as for example a solar panel meadow, a water turbine which is for instance incorporated in a lock, or a like source of clean energy. It is also possible that the electric cable is connected with the general electricity grid. Also combinations of the two are among the options. When a surplus of electric energy is available, for example when there is a hard wind blowing or when there is much sunshine and more electricity from solar energy is being supplied than is demanded, it is possible in the energy storage pontoon to convert discharged anolyte and discharged catholyte to charged anolyte and charged catholyte. This can be carried out by switching on the at least one anolyte pump and switching on the at least one catholyte pump. In that case, anolyte is then pumped through the anode chamber and catholyte is pumped through the cathode chamber.

In a first variant, there can be a single anolyte tank and a single catholyte tank. In that variant, anolyte is withdrawn on a first side of the anolyte tank and recirculated via the anode chamber to a second side of the anolyte tank. A similar kind of recirculation, in this variant, is also carried out with the catholyte which is passed from a first side of the catholyte tank via the cathode chamber to a second side of the catholyte tank.

In a second variant, there can be at least one first anolyte tank for holding discharged anolyte and one second anolyte tank for holding charged anolyte. With that variant, there may additionally be at least one first catholyte tank for holding discharged catholyte and one second catholyte tank for holding charged catholyte. In that variant, during the charging of the anolyte and the catholyte, anolyte will be pumped from the first anolyte tank to the second anolyte tank via the anode chamber of the flow battery and the second anolyte tank is filled with liquid, charged anolyte. Also, discharged catholyte will be pumped from the first catholyte tank to the second catholyte tank via the cathode chamber of the flow battery and the second catholyte tank is filled with liquid, charged catholyte.

Ships that are provided with a flow battery and an electric drive which is connected to the flow battery can then simply fill up (tank up) with charged anolyte and charged catholyte at the energy storage pontoon. Such filling up can be carried out essentially in the same manner as filling up with diesel oil as bargemen are now used to. The only difference is that, instead of one liquid, now two liquids must be taken in. This, however, is much less of a switchover than exchanging battery containers as has been proposed in the past. Moreover, the storage of the anolyte and the catholyte in the ship can be fitted in better than the positioning of battery containers in it. It is noted that a flow battery is known per se. An example thereof is described in US 2012/0282509. An enlightening explanation of the operation of a vanadium redox flow battery can be found via the following link: https://www.youtube.com/watch?v=AagO07cHRG8. Often, use is made of so-called stacks of redox flow batteries. With these, a higher power output can be furnished. The redox flow batteries can for instance be connected in parallel or in series. When in this application mention is made of a flow battery, this is also understood to cover a stack of flow batteries.

The energy storage pontoon can also be used in support of the electricity grid. For instance, in days of little wind and/or little sunshine, the charged anolyte and charged catholyte stored in the tanks can be pumped again via respectively the anode chamber and the cathode chamber of the flow battery. With the first above-discussed variant, there will be recirculation then too. With the second above-discussed variant, the anolyte will then be pumped from the second anolyte tank to the first anolyte tank and the catholyte will be pumped from the second catholyte tank to the first catholyte tank. The electric energy thereby released can be delivered to the electricity grid, for example to serve as a primary reserve or Frequency Containment Reserve (FCR) for stabilizing the electricity grid and for peak shaving. It is of great advantage that the anolyte and the catholyte are stored in tanks in an energy storage pontoon because such a pontoon can in fact be moored anywhere, so long as an electricity cable is available from the shore to feed electric energy given a surplus of electricity production and possibly carry off electricity given a demand for electricity in the electricity grid. The anolyte and the catholyte can then serve as fuel for electrically driven ships which are provided with a flow battery.

Another part of the shipping system of the invention is at least one ship. More particularly, the ship of the shipping system is provided with a hull with:
- at least one anolyte tank for holding liquid anolyte;
- at least one catholyte tank for holding liquid catholyte;
The ship is further provided with at least one flow battery which includes:
- an anode chamber provided with an anode;
- an cathode chamber provided with a cathode;
- a membrane which separates the anode chamber from the cathode chamber;
Furthermore, the ship is provided with:
- an anolyte fill opening via which the at least one anolyte tank is fillable with a liquid charged anolyte;
- a catholyte fill opening via which the at least one catholyte tank is fillable with a liquid charged catholyte;
- an anolyte removal provision via which discharged anolyte can be removed from the at least one anolyte tank; and
- a catholyte removal provision via which discharged catholyte can be removed from the at least one catholyte tank;
- at least one anolyte line which connects the at least one anolyte tank with the anode chamber;
- at least one catholyte line which connects the at least one catholyte tank with the cathode chamber;
- at least one anolyte pump which is included in the anolyte line and with the aid of which anolyte is pumpable from the at least one anolyte tank via the anode chamber of the flow battery to the at least one anolyte tank; and
- at least one catholyte pump which is included in the catholyte line and with the aid of which catholyte is pumpable from the at least one catholyte tank via the cathode chamber of the flow battery to the at least one catholyte tank;
- at least one electric motor for driving at least one screw of the ship, the electric motor being electrically connected with the flow battery.

Such a ship functions in virtually the same way as a ship which is provided with a diesel engine. Also for the ship of the shipping system according to the invention, it holds there can be two variants.

In a first variant, the ship has per flow battery one anolyte tank and one catholyte tank. In that first variant, during sailing, the anolyte is recirculated by the anolyte pump from a first side of the anolyte tank via the anode chamber to a second side of the anolyte tank. The catholyte is recirculated by the catholyte pump from a first side of the catholyte tank via the cathode chamber to a second side of the catholyte tank. As a result, electricity is produced for the purpose of energizing the at least one electric motor of the ship.

In a second variant, the ship has at least one first anolyte tank for holding charged anolyte and at least one second anolyte tank for holding discharged anolyte. Moreover, in that second variant, the ship has at least one first catholyte tank for holding charged catholyte and at least one second catholyte tank for holding discharged catholyte.

When there is no or hardly any charged anolyte and catholyte available on the ship anymore, filling up (tanking up) is to be done. In the first variant, this filling up consists in first pumping out the anolyte tank and catholyte tank, so that the discharged anolyte and catholyte are removed therefrom and then refilling the anolyte tank and catholyte tank with charged anolyte and charged catholyte. In the second variant, filling up means that not only the at least one first anolyte tank and the at least one first catholyte tank are filled with charged anolyte and catholyte respectively, but also that the at least one second anolyte tank with discharged anolyte and the at least one second catholyte tank with discharged catholyte is emptied.

It is possible, of course, to carry out filling up directly at the energy storage pontoon. However, in some cases such an energy storage pontoon will not be accessible by the ship according to the invention, for example because it is too far away or because it is moored at a place which the ship cannot get to.

In an embodiment, a shipping system according to claim 12 may be provided including a bunker ship. The bunker ship of this shipping system embodiment may be provided with a bunker ship supply tank for holding charged anolyte, a bunker ship supply tank for holding charged catholyte, a bunker ship supply tank for holding discharged anolyte, and a bunker ship supply tank for holding discharged catholyte. The bunker ship supply tanks for charged anolyte and charged catholyte can be filled from, respectively, the at least one anolyte tank and the at least one catholyte tank of the energy storage pontoon which are filled with charged anolyte and charged catholyte. These bunker ship supply tanks for charged anolyte and charged catholyte will generally be emptied at ships that need to be provided with new "fuel". The bunker ship supply tanks for discharged anolyte and discharged catholyte will generally be filled at ships and be emptied at the energy storage pontoon.

With a shipping system according to the invention it is possible to sail entirely CO₂-neutrally, for example for the purpose of transporting containers or bulk material. However, also for pleasure cruising, such a shipping system is particularly favorable. Primarily, however, it will find application in inland shipping. Such inland vessels or barges have sufficient space for storing anolyte and catholyte in the associated anolyte tank and catholyte tank. Since commercial shipping currently accounts for a substantial contribution to CO₂ emission, the shipping system according to the invention constitutes a considerable contribution to the realization of the climate targets which are currently greatly valued. Apart from the above-mentioned pleasure cruising and inland shipping, the shipping system is also applicable to ocean shipping, short sea shipping and the like.

Finally, the invention provides a method according to claim 15 for the operating of shipping system. The method comprises for the purpose of charging the anolyte and the catholyte:
- providing a shipping system according to the invention, wherein, of the energy storage pontoon, the at least one anolyte tank is at least partly filled with liquid anolyte, and wherein the at least one catholyte tank is at least partly filled with liquid catholyte;
- connecting the electric connection of the energy storage pontoon with an electric source;
- with the aid of the anolyte pump, pumping anolyte from the at least one anolyte tank via the anode chamber of the at least one flow battery to one of the at least one anolyte tank;
- with the aid of the catholyte pump, pumping catholyte from the at least one catholyte tank via the cathode chamber of the at least one flow battery to one of the at least one catholyte tank.

The method according to the invention therefore describes the charging of the discharged anolyte and the discharged catholyte and the filling of the at least one anolyte tank and the at least one catholyte tank of the energy storage pontoon with charged anolyte and charged catholyte. This method is carried out when electric power is available for this. Preferably, the electric power is furnished by renewable energy sources, such as wind and solar energy.

In an embodiment, the method can, for the purpose of supplying electric power, further comprise:
- connecting the electric connection of the energy storage pontoon with an electric load;
- with the aid of the anolyte pump, pumping anolyte from the at least one anolyte tank via the anode chamber of the at least one flow battery to one of the at least one anolyte tank of the energy storage pontoon;
- with the aid of the catholyte pump, pumping catholyte from the at least one catholyte tank via the cathode chamber of the at least one flow battery to one of the at least one catholyte tank of the energy storage pontoon.

This further elaboration concerns the supply of electric energy, which may be done when there is a need for it, for example when the demand for electric power in the electricity grid exceeds the supply. The energy storage pontoon then serves as a primary reserve or frequency containment reserve (FCR). The pontoon can also be applied for peak shaving. Thus, the energy storage pontoon and the method according to the invention can make a contribution to the stabilization of the electricity grid and also supply fuel for the ships according to the invention which are part of a shipping system according to the invention.

Further embodiments of the invention are described in the subclaims and will hereinafter be further elucidated, with reference to the drawings.

### BRIEF DESCRIPTION OF THE FIGURES

Fig. 1 shows a perspective view of an example of a pontoon according to the invention with a bunker ship according to the invention moored next to it;
Fig. 2 shows a longitudinal sectional view of the pontoon represented in Figure 1;
Fig. 3 shows a perspective view of an example of a ship according to the invention;
Fig. 4 shows a sectional view along line IV-IV of Figure 3;
Fig. 5 shows a schematic overview of an example of a shipping system according to the invention; and
Fig. 6 shows a schematic overview of another example of a shipping system according to the invention.

### DETAILED DESCRIPTION

In the following detailed description, reference is made to the drawings using reference numerals. It is important to note that the drawings are examples only and that the reference numerals used in the detailed description are for clarification only but do not in any way limit the embodiments described. Also in the appended claims, reference numerals are included, but these, in turn, do not limit the claims.

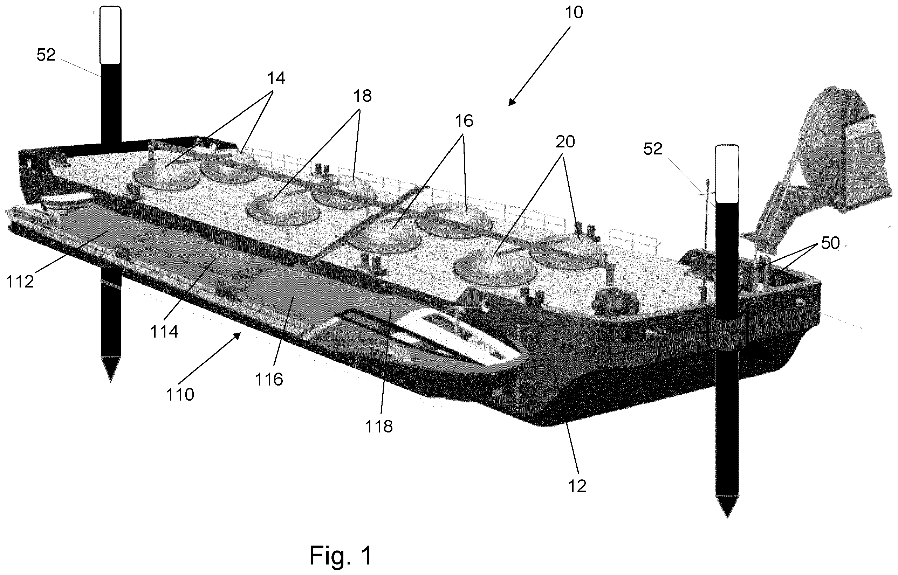

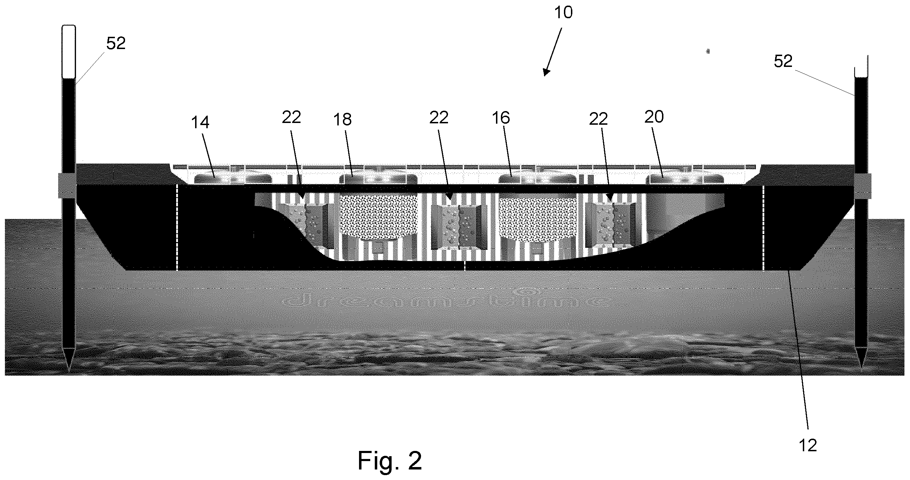

In the most general terms, the invention provides a shipping system including an energy storage pontoon 10 which comprises a floating pontoon shell 12. An example of an energy storage pontoon 10 is represented in Figures 1, 2, 5, and 6. In the pontoon shell 12 are at least one anolyte tank 14 for holding liquid anolyte and at least one catholyte tank 16 for holding liquid catholyte. The energy storage pontoon 10 further comprises at least one flow battery 22 which includes an anode chamber 24 provided with an anode 26, a cathode chamber 28 provided with a cathode 30, and a membrane 32 which separates the anode chamber 24 from the cathode chamber 28. Further, the energy storage pontoon 10 has an anolyte fill opening 34 via which the at least one anolyte tank 14 is fillable with a liquid, discharged anolyte, and the energy storage pontoon 10 has a catholyte fill opening 36 via which the at least one catholyte tank 16 is fillable with a liquid, discharged catholyte. The energy storage pontoon 10 further has an anolyte delivery provision 38 via which charged anolyte can be delivered from the at least one anolyte tank 14 or 18, as well as a catholyte delivery provision 40 via which charged catholyte can be delivered from the at least one catholyte tank 16 or 20. At least one anolyte line 42 connects the at least one anolyte tank 14 with the anode chamber 24. At least one catholyte line 44 connects the at least one catholyte tank 16 with the cathode chamber 28. In the anolyte line 42 at least one anolyte pump 46 is included with the aid of which anolyte is pumpable from the at least one anolyte tank 14 via the anode chamber 24 of the flow battery 22 to the at least one anolyte tank 14 or 18. In the catholyte line 44 at least one catholyte pump 48 is included with the aid of which anolyte is pumpable from the at least one catholyte tank 16 via the cathode chamber 28 of the flow battery 22 to the at least one catholyte tank 16 or 20. Finally, the energy storage pontoon 10 is provided with at least one electric connection 50 for electrically connecting the flow battery 22 with an electric source P and/or electric load L.

The advantages of such an energy storage pontoon 10 have already been described hereinabove in the summary, which is conveniently referred to here.

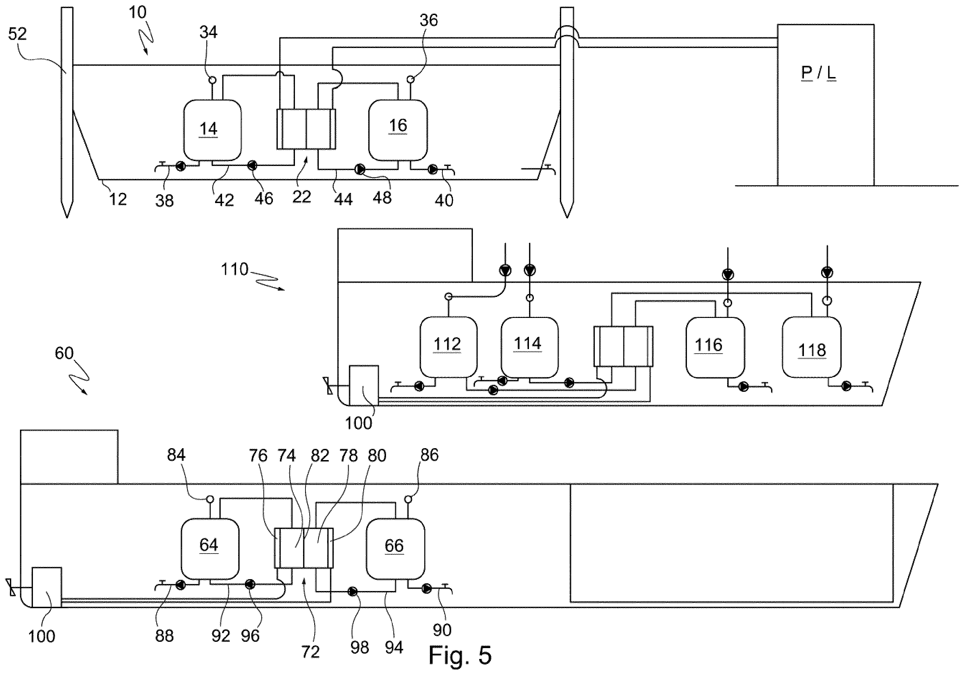

In a first embodiment, of which an example is shown in Figure 5, the at least one flow battery 22 is associated with a single anolyte tank 14 and a single catholyte tank 16. During charging, the anolyte is pumped around through the circuit which is formed by the anolyte line 42 having included therein the anolyte tank 14, the anode chamber 24 and the anolyte pump 46. The catholyte is pumped around through the circuit which is formed by the catholyte line 44 having included therein the catholyte tank 18, cathode chamber 28 and catholyte pump 48.

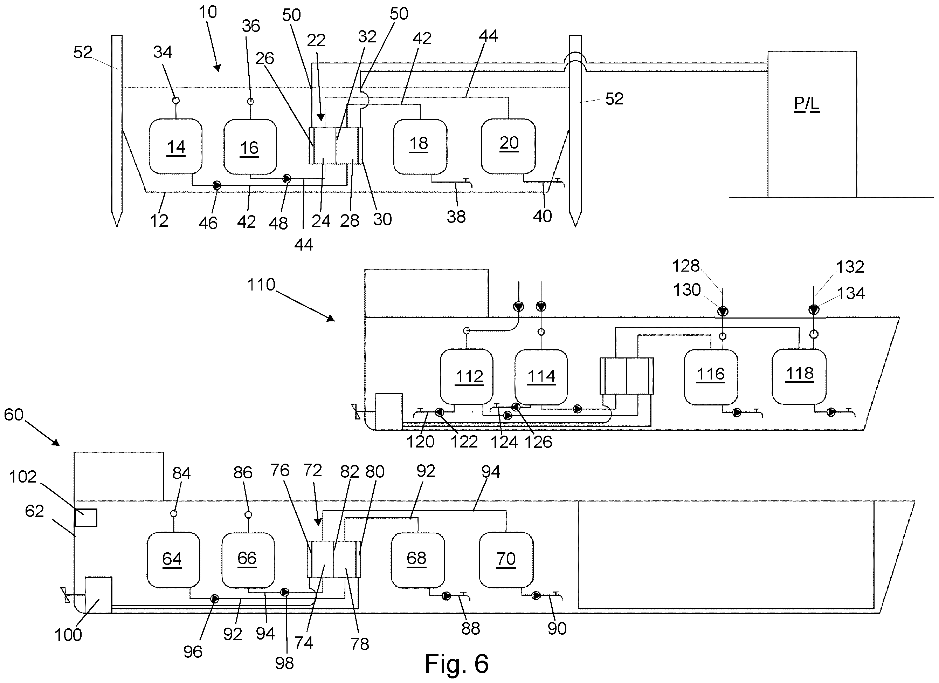

In an alternative embodiment, of which an example is shown in Figure 6, the at least one anolyte tank 14, 18 comprises at least one first anolyte tank 14 for holding liquid, discharged anolyte and at least one second anolyte tank 18 for holding liquid, charged anolyte. The at least one catholyte tank 16, 20 comprises at least one first catholyte tank 16 for holding liquid, discharged catholyte and at least one second catholyte tank 20 for holding liquid, charged catholyte. The anolyte fill opening 34 is connected to the at least one first anolyte tank 14 which is fillable with a liquid, discharged anolyte. The catholyte fill opening 36 is connected to the at least one first catholyte tank 16 which is fillable with a liquid discharged catholyte. In this second embodiment, the anolyte delivery provision 38 is connected to the at least one second anolyte tank 18. The catholyte delivery provision 40 is connected to the at least one second catholyte tank 20. The at least one anolyte line 42 connects the at least one first anolyte tank 14 via the anode chamber 24 with the at least one second anolyte tank 18. The at least one catholyte line 44 connects the at least one first catholyte tank 16 via the cathode chamber 28 with the at least one second catholyte tank 20. With the aid of the at least one anolyte pump 46, anolyte is pumpable from the at least one first anolyte tank 14 via the anode chamber 24 of the flow battery 22 to the at least one second anolyte tank 18. With the aid of the at least one catholyte pump 48, catholyte is pumpable from the at least one first catholyte tank 16 via the cathode chamber 28 of the flow battery 22 to the at least one second catholyte tank 20.

An advantage of this embodiment is that the filling of the at least one first anolyte tank 14 and the at least one first catholyte tank 16 with discharged anolyte and catholyte can take place concurrently with the delivery of charged anolyte and charged catholyte from the at least one second anolyte tank 18 and the at least one second catholyte tank 20. This in contrast to the first embodiment, where for each flow battery 22 only one anolyte tank 14 and one catholyte tank 16 is available, which tanks hence have to be successively emptied for delivering charged anolyte and catholyte and thereupon have to be filled again with discharged anolyte and catholyte.

In an embodiment, the at least one anolyte tank 14 and if present 18 and the at least one catholyte tank 16 and if present 20 of the energy storage pontoon 10 are provided on an inner side with a coating, for example a dielectric coating.

Such a coating protects the tanks, which may be made, for example, from metal, against corrosion by the anolyte and the catholyte. Moreover, leaking away of charge is minimized by the dielectric coating.

In an alternative embodiment, the at least one anolyte tank 14 and if present 18 and the at least one catholyte tank 16 and if present 20 of the energy storage pontoon 10 are made from plastic. It is then preferred that the plastic is dielectric.

Also plastic tanks have the advantage of the electricity-insulating action, so that leaking away of charge is minimized.

In an embodiment, the energy storage pontoon 10 of the shipping system may be further provided with a storage area for battery containers and with electric connections with the aid of which battery containers can be connected with the general electric connection 50 of the energy storage pontoon 10. It is possible with this embodiment to charge battery containers with the aid of the energy storage pontoon 10. This charging can take place directly from the electric source P, but it is also possible that the electric charge for the purpose of the charging of the battery containers is withdrawn from the charged anolyte and catholyte by pumping the charged anolyte through the anode chamber 24 and by pumping the charged catholyte through the cathode chamber 28. The electric energy thereby released can thereupon be stored in the battery containers. The storage area may be formed, for example, by an upper deck of the energy storage pontoon 10.

The energy storage pontoon 10 may be displaced with the aid of a tugboat and possibly may itself be provided with a drive so that it can move itself without help of tugboats. In the exemplary embodiments shown, the pontoon is provided with spud poles 52 connected in a manner movable up and down with the pontoon shell 12.

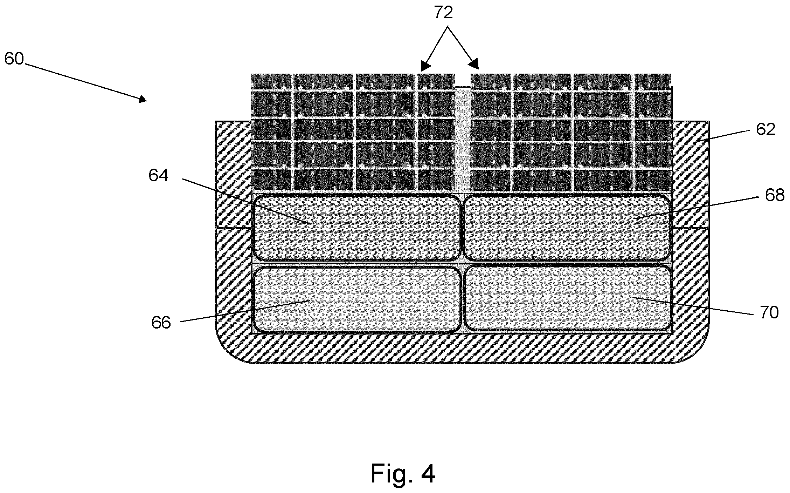

The shipping system further comprises at least one ship 60 of which an example is shown in Figures 3, 4, 5 and 6. In the hull 62 of the ship 60 are at least one anolyte tank 64 for holding liquid anolyte and at least one catholyte tank 66 for holding liquid catholyte. The ship 60 further comprises at least one flow battery 72 which includes an anode chamber 74 provided with an anode 76, a cathode chamber 78 provided with a cathode 80, and a membrane 82 which separates the anode chamber 74 from the cathode chamber 78. Further, the ship 60 has an anolyte fill opening 84 via which the at least one anolyte tank 64 is fillable with a liquid charged anolyte, and the ship 60 has a catholyte fill opening 86 via which the at least one catholyte tank 66 is fillable with a liquid charged catholyte. The ship 60 also has an anolyte removal provision 88 via which discharged anolyte can be removed from the at least one anolyte tank 64 or 68, and has a catholyte removal provision 90 via which discharged catholyte can be removed from the at least one catholyte tank 66 or 70. Further, the ship 60 is provided with at least one anolyte line 92 which connects the at least one anolyte tank 64 with the anode chamber 74. Similarly, the ship 60 also has at least one catholyte line 94 which connects the at least one catholyte tank 66 with the cathode chamber 78. In the anolyte line 92, at least one anolyte pump 96 is included, with the aid of which anolyte is pumpable from the at least one anolyte tank 64 via the anode chamber 74 of the flow battery 72 to one of the at least one anolyte tank 64 or 68. In the catholyte line 94, at least one catholyte pump 98 is included, with the aid of which catholyte is pumpable from the at least one catholyte tank 66 via the cathode chamber 78 of the flow battery 72 to one of the at least one catholyte tank 66 or 70. Finally, the ship 60 has at least one electric motor 100 for driving of at least one screw of the ship 60. The electric motor 100 is electrically connected with the flow battery 72.

In an embodiment, of which an example is shown in Figure 5, the at least one flow battery 72 of the ship 60 is associated with a single anolyte tank 64 and a single catholyte tank 66 of the ship. During charging, the anolyte is pumped around through the circuit which is formed by the anolyte line 92 having included therein the anolyte tank 64, the anode chamber 74 and the anolyte pump 96, the catholyte is pumped around through the circuit which is formed by the catholyte line 94 having included therein the catholyte tank 66, cathode chamber 78 and catholyte pump 98.

In an embodiment, of which an example is shown in Figure 6, the at least one anolyte tank of the ship 60 comprises at least one first anolyte tank 64 for holding liquid, charged anolyte and at least one second anolyte tank 68 for holding liquid, discharged anolyte. The at least one catholyte tank of the ship 60 comprises at least one first catholyte tank 66 for holding liquid, charged catholyte and at least one second catholyte tank 70 for holding liquid, discharged catholyte. The anolyte fill opening 84 is connected to the at least one first anolyte tank 64 of the ship 60 which is fillable with a liquid charged anolyte. The catholyte fill opening 86 is connected to the at least one first catholyte tank 66 of the ship 60 which is fillable with a liquid charged catholyte. The anolyte removal provision 88 is connected to the at least one second anolyte tank 68 of the ship 60, whereby with the aid of the anolyte removal provision 88, discharged anolyte can be removed from the at least one second anolyte tank 68. The catholyte removal provision 90 is connected to the at least one second catholyte tank 70 of the ship 60, whereby with the aid of the catholyte removal provision 90, discharged catholyte can be removed from the at least one second catholyte tank 70 of the ship 60. The at least one anolyte line 92 connects the at least one first anolyte tank 64 via the anode chamber 74 with the at least one second anolyte tank 68 of the ship 60. The at least one catholyte line 94 connects the at least one first catholyte tank 66 via the cathode chamber 78 with the at least one second catholyte tank 70 of the ship 60. With the aid of the at least one anolyte pump 96, anolyte is pumpable from the at least one first anolyte tank 64 via the anode chamber 74 of the flow battery 72 to the at least one second anolyte tank 68. With the aid of the at least one catholyte pump 98, catholyte is pumpable from the at least one first catholyte tank 66 via the cathode chamber 78 of the flow battery 72 to the at least one second catholyte tank 70.

An advantage of this embodiment is that removal of discharged anolyte and catholyte from the at least one second anolyte tank 68 and the at least one second catholyte tank 70 can take place concurrently with the filling of the at least one first anolyte tank 64 and the at least one first catholyte tank 66 with charged anolyte and charged catholyte. The ship 60 can hence continue on its way more quickly. This in contrast to the embodiment of the system, where for each flow battery 72 of the ship only one anolyte tank 64 and one catholyte tank 66 are available, which tanks hence have to be successively emptied for delivering discharged anolyte and catholyte and thereupon have to be filled again with charged anolyte and catholyte.

In an embodiment, the at least one anolyte tank 64 and if present 68 of the ship 60 and the at least one catholyte tank 66 and if present 70 of the ship 60 may be provided on an inner side with a coating, for example a dielectric coating.

In an alternative embodiment, the at least one anolyte tank 64 and if present 68 of the ship 60, and the at least one catholyte tank 66 and if present 70 of the ship 60 are made from plastic. The plastic may then be dielectric.

Both embodiments have the advantage that leaking away of electric charge from the charged anolyte and the charged catholyte is kept to the minimum in the ship 60 and that, moreover, corrosion of the tanks is hindered.

In an embodiment of the shipping system, the ship 60 may be provided with a connection 102 for electrically connecting the flow battery 72 of the ship 60 with an electric source P and/or electric load L.

This embodiment provides the advantage that when no bunker ship 110 or energy storage pontoon 10 is available, the "fuel" of the ship can yet be brought into a usable condition again by connecting the electric connection 102 with an electric source P, for example on shore. A voltage is thereby applied to the anode 76 and the cathode 80 of the flow battery 72. The discharged anolyte and catholyte can then be pumped through the flow battery 72 of the ship 60. During the passage of respectively the anode chamber 74 and the cathode chamber 78 of the flow battery 72 of the ship, the anolyte and the catholyte are brought from the discharged into the charged condition. Thereupon, the ship 60 can continue its journey without having tanked up liquid but instead the ship has tanked up electric power and converted it into chemical potential energy which is stored in the charged anolyte and catholyte.

In an embodiment, the ship can be an inland vessel or barge 60.

Especially barges 60 have sufficient storage space for accommodating the at least one anolyte tank 64 and if present 68 and the catholyte tanks 66 and if present 70. In fact, such tanks 64, 66, 68, 70 only account for a small part of the space that is available in an inland barge 60.

In an embodiment, a ship of the shipping system can be a bunker ship 110. An example of such a bunker ship 110 is shown in Figures 1 and 5. The bunker ship 110 comprises a bunker ship supply tank 112 for holding charged anolyte, a bunker ship supply tank 114 for holding charged catholyte, a bunker ship supply tank 116 for holding discharged anolyte, and a bunker ship supply tank 118 for holding discharged catholyte.

In a further elaboration, the bunker ship 110 may be provided with an anolyte delivery provision which comprises a second anolyte line 120 and a second anolyte pump 122 for pumping charged anolyte from the bunker ship supply tank 112 for charged anolyte to an anolyte tank 64 of a user. The bunker ship may then further have a catholyte delivery provision which comprises a second catholyte line 124 and a second catholyte pump 126 for pumping charged catholyte from the bunker ship supply tank 114 for charged catholyte to a catholyte tank 66 of a user.

A thus-implemented bunker ship 110 has the advantage that no external pumps are necessary to be able to deliver charged anolyte and charged catholyte to, for example, the first anolyte tank 64 and the first catholyte tank 66 of a ship 60. The bunker ship 110 according to this embodiment can therefore function in exactly the same manner as a conventional bunker ship which delivers diesel oil to ships.

In a further elaboration, the bunker ship may be provided with an anolyte receiving provision which comprises a third anolyte line 128 and a third anolyte pump 130 for pumping discharged anolyte from an anolyte tank 68 of a user to the bunker ship supply tank 116 for discharged anolyte. The bunker ship 110 may then further have a catholyte receiving provision which comprises a third catholyte line 132 and a third catholyte pump 134 for pumping discharged catholyte from a catholyte tank of a user to the bunker ship supply tank 118 for discharged catholyte.

A thus-implemented bunker ship 110 can pump out the at least one anolyte tank 64 and if present 68 and the at least one catholyte tank 66 and if present 70. In that case, therefore, the ship 60 itself does not need to have a pump to pump out the at least one anolyte tank 64 and if present 68 and the at least one catholyte tank 66 and if present 70. Obviously, the invention does not exclude a ship 60 being provided with its own pumps for emptying the at least one anolyte tank 64 or 68 and the at least one catholyte tank 66 or 70.

When the shipping system comprises a bunker ship 110, it is possible to supply "fuel", that is, charged anolyte and charged catholyte, also to ships 60 that cannot reach the energy storage pontoon 10 or in respect of which it is found unfavorable to have them navigate to the energy storage pontoon 10, for example for economic reasons or accessibility reasons.

Finally, the invention provides a method for the operating of shipping system. The method comprises for the purpose of charging the anolyte and the catholyte:
- providing a shipping system according to the invention, wherein, of the energy storage pontoon 10, the at least one anolyte tank 14 and if present 18 is at least partly filled with liquid anolyte, and wherein the at least one catholyte tank 16 and if present 20 is at least partly filled with liquid catholyte;
- connecting the electric connection 50 of the energy storage pontoon 10 with an electric source P;
- with the aid of the anolyte pump 46, pumping anolyte from the at least one anolyte tank 14 via the anode chamber 24 of the at least one flow battery 22 to one of the at least one anolyte tank 14; 18;
- with the aid of the catholyte pump 48, pumping catholyte from the at least one catholyte tank 16 via the cathode chamber 28 of the at least one flow battery 22 to one of the at least one catholyte tank 16; 20.

This method, too, has already been discussed in the summary and the advantages mentioned there are understood to be inserted here by reference. With the aid of the method, in an energy-neutral manner, a liquid "fuel" can be produced which can be simply supplied to a ship 60. For the use of an energy storage pontoon 10, no complicated permit procedure needs to be traversed for the construction of infrastructure on land. This can yield a huge saving in time and money.

In an embodiment, the method comprises for the purpose of supplying electric power:
- connecting the electric connection 50 of the energy storage pontoon 10 with an electric load L;
- with the aid of the anolyte pump 46, pumping anolyte from the at least one anolyte tank 14 via the anode chamber 24 of the at least one flow battery 22 to one of the at least one anolyte tank 14; 18;
- with the aid of the catholyte pump 48, pumping catholyte from the at least one catholyte tank 16 via the cathode chamber 28 of the at least one flow battery 22 to one of the at least one catholyte tank 16; 20.

With this embodiment of the method, there is provided to the energy storage pontoon 10 an additional function besides the function of production and supply of fuel for ships 60. For when in the electricity grid there is more demand than supply of electric energy, the energy storage pontoon 10 can meet this extra demand with the aid of the application of the present embodiment of the method.

When this method is used with an energy storage pontoon 10 including first and second anolyte tanks 14, 18 and first and second catholyte tanks 16, 20, the method comprises:
- with the aid of the anolyte pump 46, pumping discharged anolyte from the first anolyte tank 14 via the anode chamber 24 of the at least one flow battery 22 to the second anolyte tank 18 when via the electric connection 50 electric power is available from the electric source P;
- with the aid of the catholyte pump 48, pumping discharged catholyte from the first catholyte tank 16 via the cathode chamber 28 of the at least one flow battery 22 to the second catholyte tank 20 when via the electric connection 50 electric power is available from the electric source P.

In an embodiment, the method further comprises:
- via the anolyte delivery provision 38, supplying charged anolyte to an anolyte tank 64 of a ship 60, or to a bunker ship supply tank 112 for charged anolyte;
- via the catholyte delivery provision 40, supplying charged catholyte to a catholyte tank 66 of a ship 60, or to a bunker ship supply tank 114 for charged catholyte.

This embodiment in fact describes supplying of charged anolyte and catholyte to a ship 60 or a bunker ship 110.

In an embodiment, the method can further comprise:
- via the anolyte fill opening 34, feeding discharged anolyte to the at least one anolyte tank 14 of the energy storage pontoon 10; and
- via the catholyte fill opening 36, feeding discharged catholyte to the at least one catholyte tank 16 of the energy storage pontoon 10.

This embodiment describes the taking up of discharged anolyte and discharged catholyte from, for example, a ship 60.

When the shipping system includes a bunker ship 110 with an anolyte delivery provision of its own and a catholyte delivery provision of its own, the method can further comprise:
- with the aid of the second anolyte pump 122, via the second anolyte line 120, pumping charged anolyte from the bunker ship supply tank 112 for charged anolyte to an above-mentioned anolyte tank 64 of a ship 60 of the shipping system; and
- with the aid of the second catholyte pump 126, via the second catholyte line 124, pumping charged catholyte from the bunker ship supply tank 114 for charged catholyte to an above-mentioned catholyte tank 66 of a ship 60 of the shipping system.

This embodiment concerns supplying of charged anolyte and charged catholyte from the bunker ship 110.

When the bunker ship 110 additionally comprises an anolyte receiving provision of its own and a catholyte receiving provision of its own, the method can further comprise:
- with the aid of the third anolyte pump 130, via the third anolyte line 128, pumping discharged anolyte from an above-mentioned anolyte tank 64 or 68 of the ship 60 to the bunker ship supply tank 116 for discharged anolyte;
- with the aid of the third catholyte pump 134, via the third catholyte line 132, pumping discharged catholyte from an above-mentioned catholyte tank 66 or 70 to the bunker ship supply tank 118 for discharged catholyte.

This embodiment concerns the bunker ship 110 receiving discharged anolyte and discharged catholyte.

The invention is not limited to the embodiments described above nor to the examples represented in the figures.

Various modifications are possible within the framework of the invention and the protection of the application is defined by the appended claims.

### LIST OF ELEMENTS

- 10: energy storage pontoon
- 12: pontoon shell
- 14: first anolyte tank of the energy storage pontoon
- 16: first catholyte tank of the energy storage pontoon
- 18: second anolyte tank of the energy storage pontoon
- 20: second catholyte tank of the energy storage pontoon
- 22: flow battery of the energy storage pontoon
- 24: anode chamber of the flow battery of the pontoon
- 26: anode of the flow battery of the pontoon
- 28: cathode chamber of the flow battery of the pontoon
- 30: cathode of the flow battery of the pontoon
- 32: membrane of the flow battery of the pontoon
- 34: anolyte fill opening of the pontoon
- 36: catholyte fill opening of the pontoon
- 38: anolyte delivery provision of the pontoon
- 40: catholyte delivery provision of the pontoon
- 42: anolyte line of the pontoon
- 44: catholyte line of the pontoon
- 46: anolyte pump of the pontoon
- 48: catholyte pump of the pontoon
- 50: electric connection of the pontoon
- 52: spud poles of the pontoon
- 60: ship
- 62: hull of the ship
- 64: first anolyte tank of the ship
- 66: first catholyte tank of the ship
- 68: second anolyte tank of the ship
- 70: second catholyte tank of the ship
- 72: flow battery of the ship
- 74: anode chamber of the flow battery of the ship
- 76: anode van de flow battery of the ship
- 78: cathode chamber of the flow battery of the ship
- 80: cathode of the flow battery of the ship
- 82: membrane of the flow battery of the ship
- 84: anolyte fill opening of the ship
- 86: catholyte fill opening of the ship
- 88: anolyte removal provision of the ship
- 90: catholyte removal provision of the ship
- 92: anolyte line of the ship
- 94: catholyte line of the ship
- 96: anolyte pump of the ship
- 98: catholyte pump of the ship
- 100: electric motor of the ship
- 102: electric connection of the ship
- 110: bunker ship
- 112: bunker ship supply tank for holding charged anolyte
- 114: bunker ship supply tank for holding charged catholyte
- 116: bunker ship supply tank for holding discharged anolyte
- 118: bunker ship supply tank for holding discharged catholyte
- 120: second anolyte line of the bunker ship
- 122: second anolyte pump of the bunker ship
- 124: second catholyte line of the bunker ship
- 126: second catholyte pump of the bunker ship
- 128: third anolyte line of the bunker ship
- 130: third anolyte pump of the bunker ship
- 132: third catholyte line of the bunker ship
- 134: third catholyte pump of the bunker ship
- P: electric source
- L: electric load

## Claims

1. A shipping system comprising:
- at least one energy storage pontoon (10) and
- at least one ship (60);
the at least one energy storage pontoon (10) of the shipping system comprising:
- a floating pontoon shell (12) with:
• at least one anolyte tank (14; 14, 18) for holding liquid anolyte;
• at least one catholyte tank (16; 16, 20) for holding liquid catholyte;
wherein the energy storage pontoon further comprises
- at least one flow battery (22) including:
• an anode chamber (24) provided with an anode (26);
• a cathode chamber (28) provided with a cathode (30);
• a membrane (32) which separates the anode chamber (24) from the cathode chamber (28);
wherein the energy storage pontoon (10) is further provided with:
- an anolyte fill opening (34) via which the at least one anolyte tank (14; 14, 18) is fillable with a liquid, discharged anolyte;
- a catholyte fill opening (36) via which the at least one catholyte tank (16; 16, 20) is fillable with a liquid, discharged catholyte;
- an anolyte delivery provision (38) via which charged anolyte can be delivered from the at least one anolyte tank (14; 18); and
- a catholyte delivery provision (40) via which charged catholyte can be delivered from the at least one catholyte tank (16; 20);
- at least one anolyte line (42) which connects the at least one anolyte tank (14; 14, 18) with the anode chamber (24);
- at least one catholyte line (44) which connects the at least one catholyte tank (16; 16, 20) with the cathode chamber (28);
- at least one anolyte pump (46) which is included in the anolyte line (42) and with the aid of which anolyte is pumpable from the at least one anolyte tank (14) via the anode chamber (24) of the flow battery (22) to the at least one anolyte tank (14; 18);
- at least one catholyte pump (48) which is included in the catholyte line (44) and with the aid of which catholyte is pumpable from the at least one catholyte tank (16) via the cathode chamber (28) of the flow battery (22) to the at least one catholyte tank (16; 20); and
- at least one electric connection (50) for electrically connecting the flow battery (22) with an electric source (P) and/or electric load (L);
- the at least one energy storage pontoon being connected to an electric source (P) via the at least one electric connection (50), the electric source (P) for example being the electricity grid, or a power station,
wherein the at least one ship of the shipping system comprises:
- a hull (62) with:
• at least one anolyte tank (64; 64, 68) for holding liquid anolyte;
• at least one catholyte tank (66; 66, 70) for holding liquid catholyte;
wherein the ship (60) further comprises
- at least one flow battery (72) including:
• an anode chamber (74) provided with an anode (76);
• a cathode chamber (78) provided with a cathode (80);
• a membrane (82) which separates the anode chamber (74) from the cathode chamber (78);
wherein the ship is further provided with:
- an anolyte fill opening (84) via which the at least one anolyte tank (64) is fillable with a liquid charged anolyte;
- a catholyte fill opening (86) via which the at least one catholyte tank (66) is fillable with a liquid charged catholyte;
- an anolyte removal provision (88) via which discharged anolyte can be removed from the at least one anolyte tank (64; 68); and
- a catholyte removal provision (90) via which discharged catholyte can be removed from the at least one catholyte tank (66; 70);
- at least one anolyte line (92) which connects the at least one anolyte tank (64; 64,68) with the anode chamber (74);
- at least one catholyte line (94) which connects the at least one catholyte tank (66; 66, 70) with the cathode chamber (78);
- at least one anolyte pump (96) which is included in the anolyte line (92) and with the aid of which anolyte is pumpable from the at least one anolyte tank (64) via the anode chamber (74) of the flow battery (72) to one of the at least one anolyte tank (64; 68); and
- at least one catholyte pump (98) which is included in the catholyte line (94) and with the aid of which catholyte is pumpable from the at least one catholyte tank (66) via the cathode chamber (78) of the flow battery (72) to one of the at least one catholyte tank (66; 70);
- at least one electric motor (100) for driving at least one screw of the ship (60), wherein the electric motor (100) is connected with the flow battery (72).

2. The shipping system according to claim 1, wherein the at least one anolyte tank (14, 18) of the energy storage pontoon (10) comprises:
- at least one first anolyte tank (14) for holding liquid, discharged anolyte;
- at least one second anolyte tank (18) for holding liquid, charged anolyte;
and wherein the at least one catholyte tank (16, 20) of the energy storage pontoon (10) comprises:
- at least one first catholyte tank (16) for holding liquid, discharged catholyte;
- at least one second catholyte tank (20) for holding liquid, charged catholyte;
wherein the anolyte fill opening (34) is connected to the at least one first anolyte tank (14) which is fillable with a liquid discharged anolyte;
wherein the catholyte fill opening (36) is connected to the at least one first catholyte tank (16) which is fillable with a liquid discharged catholyte;
wherein the anolyte delivery provision (38) is connected to the at least one second anolyte tank (18); and
wherein the catholyte delivery provision (40) is connected to the at least one second catholyte tank (20);
wherein the at least one anolyte line (42) connects the at least one first anolyte tank (14) via the anode chamber (24) with the at least one second anolyte tank (18);
wherein the at least one catholyte line (44) connects the at least one first catholyte tank (16) via the cathode chamber (28) with the at least one second catholyte tank (20);
wherein with the aid of the at least one anolyte pump (46) anolyte is pumpable from the at least one first anolyte tank (14) via the anode chamber (24) of the flow battery (22) to the at least one second anolyte tank (18);
wherein with the aid of the at least one catholyte pump (48) catholyte is pumpable from the at least one first catholyte tank (16) via the cathode chamber (28) of the flow battery (22) to the at least one second catholyte tank (20).

3. The shipping system according to claim 1 or 2, wherein the at least one anolyte tank (14; 14, 18) of the energy storage pontoon (10) and the at least one catholyte tank (16; 16, 20) of the energy storage pontoon (10) are provided on an inner side with a coating, for example a dielectric coating.

4. The shipping system according to claim 1 or 2, wherein the at least one anolyte tank (14; 14, 18) and the at least one catholyte tank (16; 16, 20) of the energy storage pontoon (10) are made from plastic.

5. The shipping system according to claim 4, wherein the plastic is dielectric.

6. The shipping system according to any one of claims 1-5, wherein the at least one anolyte tank of the ship comprises:
- at least one first anolyte tank (64) for holding liquid, charged anolyte;
- at least one second anolyte tank (68) for holding liquid, discharged anolyte;
and wherein the at least one catholyte tank of the ship comprises:
- at least one first catholyte tank (66) for holding liquid, charged catholyte;
- at least one second catholyte tank (70) for holding liquid, discharged catholyte;
wherein the anolyte fill opening (84) of the ship is connected to the at least one first anolyte tank (64) of the ship which is fillable with a liquid charged anolyte;
wherein the catholyte fill opening (86) of the ship is connected to the at least one first catholyte tank (66) of the ship which is fillable with a liquid charged catholyte;
wherein the anolyte removal provision (88) is connected to the at least one second anolyte tank (68) of the ship, wherein with the aid of the anolyte removal provision (88) discharged anolyte can be removed from the at least one second anolyte tank (68) of the ship; and
wherein the catholyte removal provision (90) is connected to the second catholyte tank (70) of the ship, wherein with the aid of the catholyte removal provision (90) discharged catholyte can be removed from the at least one second catholyte tank (70) of the ship;
wherein the at least one anolyte line (92) connects the at least one first anolyte tank (64) via the anode chamber (74) with the at least one second anolyte tank (68) of the ship;
wherein the at least one catholyte line (94) connects the at least one first catholyte tank (66) via the cathode chamber (78) with the at least one second catholyte tank (70) of the ship;
wherein with the aid of the at least one anolyte pump (96) anolyte is pumpable from the at least one first anolyte tank (64) via the anode chamber (74) of the flow battery (72) to the at least one second anolyte tank (68) of the ship; and
wherein with the aid of the at least one catholyte pump (98) catholyte is pumpable from the at least one first catholyte tank (66) via the cathode chamber (78) of the flow battery (72) to the at least one second catholyte tank (70) of the ship.

7. The shipping system according to any one of claims 1-6, wherein the at least one anolyte tank (64; 64, 68) of the ship and the at least one catholyte tank (66; 66, 70) of the ship are provided on an inner side with a coating, for example a dielectric coating.

8. The shipping system according to any one of claims 1-7, wherein the at least one anolyte tank (64; 64, 68) and the at least one catholyte tank (66; 66, 70) are made from plastic.

9. The shipping system according to claim 8, wherein the plastic is dielectric.

10. The shipping system according to any one of claims 1-9, wherein the ship (60) is provided with a connection (102) for electrically connecting the flow battery (72) of the ship (60) with an electric source (P) and/or electric load (L).

11. The shipping system according to any one of claims 1-10, wherein the ship is an inland vessel (60).

12. The shipping system according to any one of claims 1-11, wherein the at least one ship comprises at least two ships, of which at least one ship is a bunker ship (110), wherein the bunker ship (110) comprises:
- a bunker ship supply tank (112) for holding charged anolyte,
- a bunker ship supply tank (114) for holding charged catholyte,
- a bunker ship supply tank (116) for holding discharged anolyte, and
- a bunker ship supply tank (118) for holding discharged catholyte,

13. The shipping system according to claim 12, wherein the bunker ship (110) comprises:
- an anolyte delivery provision which comprises a second anolyte line (120) and a second anolyte pump (122) for pumping charged anolyte from the bunker ship supply tank (112) for charged anolyte to an anolyte tank (64) of a user;
- a catholyte delivery provision which comprises a second catholyte line (124) and a second catholyte pump (126) for pumping charged catholyte from the bunker ship supply tank (114) for charged catholyte to a catholyte tank (66) of a user.

14. The shipping system according to claim 13 wherein the bunker ship (110) comprises:
- an anolyte receiving provision which comprises a third anolyte line (128) and a third anolyte pump (130) for pumping discharged anolyte from an anolyte tank of a user to the bunker ship supply tank (116) for discharged anolyte; and
- a catholyte receiving provision which comprises a third catholyte line (132) and a third catholyte pump (134) for pumping discharged catholyte from a catholyte tank of a user to the bunker ship supply tank (118) for discharged catholyte.

15. A shipping operation method, wherein the method comprises for the purpose of charging the anolyte and the catholyte:
- providing a shipping system according to any one of claims 1-14, wherein, of the energy storage pontoon (10), the at least one anolyte tank (14; 14, 18) is at least partly filled with liquid anolyte, and wherein the at least one catholyte tank (16; 16, 20) is at least partly filled with liquid catholyte;
- connecting the electric connection (50) of the energy storage pontoon (10) with an electric source (P);
- with the aid of the anolyte pump (46), pumping anolyte from the at least one anolyte tank (14) via the anode chamber (24) of the at least one flow battery (22) to one of the at least one anolyte tank (14; 18);
- with the aid of the catholyte pump (48), pumping catholyte from the at least one catholyte tank (16) via the cathode chamber (28) of the at least one flow battery (22) to one of the at least one catholyte tank (16; 20).

16. The method according to claim 15, wherein the method for the purpose of supplying electric power comprises:
- connecting the electric connection (50) of the energy storage pontoon (10) with an electric load (L);
- with the aid of the anolyte pump (46), pumping anolyte from the at least one anolyte tank (14) via the anode chamber (24) of the at least one flow battery (22) to one of the at least one anolyte tank (14; 18);
- with the aid of the catholyte pump (48), pumping catholyte from the at least one catholyte tank (16) via the cathode chamber (28) of the at least one flow battery (22) to one of the at least one catholyte tank (16; 20).

17. The method according to claim 15 or 16, wherein the shipping system is implemented according to claim 2, wherein the at least one first anolyte tank (14) of the energy storage pontoon (10) is at least partly filled with liquid, discharged anolyte, the at least one first catholyte tank (16) of the energy storage pontoon (10) is at least partly filled with liquid, discharged catholyte, the at least one second anolyte tank (18) of the energy storage pontoon (10) is at least partly filled with liquid charged anolyte, and the at least one second catholyte tank (20) of the energy storage pontoon (10) is at least partly filled with liquid, charged catholyte;
wherein the method comprises:
- with the aid of the anolyte pump (46), pumping discharged anolyte from the first anolyte tank (14) via the anode chamber (24) of the at least one flow battery (22) to the second anolyte tank (18) when via the electric connection (50) electric power is available from the electric source (P);
- with the aid of the catholyte pump (48), pumping discharged catholyte from the first catholyte tank (16) via the cathode chamber (28) of the at least one flow battery (22) to the second catholyte tank (20) when via the electric connection (50) electric power is available from the electric source (P).

18. The method according to claim 17, further comprising:
- with the aid of the anolyte pump (46) of the energy storage pontoon (10), pumping charged anolyte from the second anolyte tank (18) via the anode chamber (24) of the at least one flow battery (22) to the first anolyte tank (14) of the energy storage pontoon (10) when electric power via the electric connection (50) is demanded by the electric load (L);
- with the aid of the catholyte pump (48) of the energy storage pontoon (10), pumping charged catholyte from the second anolyte tank (20) via the cathode chamber (28) of the at least one flow battery (22) to the first catholyte tank (16) of the energy storage pontoon (10) when electric power via the electric connection (50) is demanded by the electric load (L).

19. The method according to any one of claims 15-18, further comprising:
- via the anolyte delivery provision (38), supplying charged anolyte to an anolyte tank (64) of a ship (60), or to a bunker ship supply tank (112) for charged anolyte;
- via the catholyte delivery provision (40), supplying charged catholyte to a catholyte tank (66) of a ship (60), or to a bunker ship supply tank (114) for charged catholyte.

20. The method according to any one of claims 15-19, further comprising:
- via the anolyte fill opening (34), feeding discharged anolyte to the at least one anolyte tank (14) of the energy storage pontoon (10); and
- via the catholyte fill opening (36), feeding discharged catholyte to the at least one catholyte tank (16) of the energy storage pontoon (10).

21. The method according to any one of claims 15-20, wherein the shipping system is according to any one of claims 13-14 including the bunker ship (110) being used, wherein the method further comprises:
- with the aid of the second anolyte pump (122), via the second anolyte line (120), pumping charged anolyte from the bunker ship supply tank (112) to a said anolyte tank (64) of a ship (60) of the shipping system; and
- with the aid of the second catholyte pump (126), via the second catholyte line (124), pumping charged catholyte from the bunker ship supply tank (114) for charged catholyte to a said catholyte tank (66) of a ship (60) of the shipping system.

22. The method according to any one of claims 15-21, wherein the shipping system is according to claim 14 including bunker ship (110) being used, wherein the method further comprises:
- with the aid of the third anolyte pump (130), via the third anolyte line (128), pumping discharged anolyte from a said anolyte tank (64 or 68) of the ship (60) to the bunker ship supply tank (116) for discharged anolyte;
- with the aid of the third catholyte pump (134), via the third catholyte line (132), pumping discharged catholyte from a said catholyte tank (66 or 70) of the ship (60) to the bunker ship supply tank (118) for discharged catholyte.

## Patentansprüche

1. Schifffahrtssystem, das Folgendes umfasst:
- mindestens einen Energiespeicherponton (10) und
- mindestens ein Schiff (60);
wobei der mindestens eine Energiespeicherponton (10) des Schifffahrtssystems Folgendes umfasst:
- eine schwimmende Pontonhülle (12) mit:
• mindestens einem Anolyttank (14; 14, 18) zum Aufnehmen flüssigen Anolyts;
• mindestens einen Katholyttank (16; 16, 20) zum Aufnehmen flüssigen Katholyts;
wobei der Energiespeicherponton ferner Folgendes umfasst:
- mindestens eine Flow-Batterie (22), die Folgendes beinhaltet:
• eine Anodenkammer (24), die mit einer Anode (26)) versehen ist;
• eine Kathodenkammer (28), die mit einer Kathode (30) versehen ist;
• eine Membran (32), die die Anodenkammer (24) von der Kathodenkammer (28) trennt;
wobei der Energiespeicherponton (10) ferner mit Folgendem versehen ist:
- eine Anolytfüllöffnung (34), über die der mindestens eine Anolyttank (14; 14, 18) mit einem flüssigen, entladenen Anolyt befüllbar ist;
- eine Katholytfüllöffnung (36), über die mindestens ein Katholyttank (16; 16, 20) mit einem flüssigen, entladenen Katholyt befüllbar ist;
- eine Anolytabgabevorrichtung (38), über die aufgeladener Anolyt aus dem mindestens einen Anolyttank (14; 18) abgegeben werden kann; und
- eine Katholytabgabevorrichtung (40), über die aufgeladener Katholyt aus dem mindestens einen Katholyttank (16; 20) abgegeben werden kann;
- mindestens eine Katholytleitung (42), die den mindestens einen Anolyttank (14; 14, 18) mit der Anodenkammer (24) verbindet;
- mindestens eine Katholytleitung (44), die den mindestens einen Katholyttank (16; 16, 20) mit der Kathodenkammer (28) verbindet;
- mindestens eine Anolytpumpe (46), die in der Anolytleitung (42) beinhaltet ist und mit deren Hilfe der Anolyt aus dem mindestens einen Anolyttank (14) über die Anodenkammer (24) der Flow-Batterie (22) zu dem mindestens einen Anolyttank (14; 18) pumpbar ist;
- mindestens eine Katholytpumpe (48), die in der Katholytleitung (44) beinhaltet ist und mit deren Hilfe der Katholyt aus dem mindestens einen Katholyttank (16) über die Kathodenkammer (28) der Flow-Batterie (22) zu dem mindestens einen Katholyttank (16; 20) pumpbar ist; und
- mindestens eine Stromverbindung (50), um die Flow-Batterie mit einer Stromquelle (22) und/oder einem Stromverbraucher (L) zu verbinden;
- wobei der mindestens eine Energiespeicherponton mit einer Stromquelle (P) über die mindestens eine Stromverbindung (50) verbunden ist, wobei die Stromquelle (P) beispielsweise das Elektrizitätsnetz oder ein Kraftwerk ist,
wobei das mindestens eine Schiff des Schifffahrtssystems Folgendes umfasst:
- einen Rumpf (62) mit:
• mindestens einem Anolyttank (64; 64, 68) zum Aufnehmen flüssigen Anolyts;
• mindestens einem Katholyttank (66; 66, 70) zum Aufnehmen flüssigen Katholyts;
wobei das Schiff (60) ferner Folgendes umfasst:
- mindestens eine Flow-Batterie (72), die Folgendes beinhaltet:
• eine Anodenkammer (74), die mit einer Anode (76)) versehen ist;
• eine Kathodenkammer (78), die mit einer Kathode (80) versehen ist;
• eine Membran (82), die die Anodenkammer (74) von der Kathodenkammer (78) trennt;
wobei das Schiff ferner mit Folgendem versehen ist:
- eine Anolytfüllöffnung (84), über die der mindestens eine Anolyttank (64) mit einem flüssigen, aufgeladenen Anolyt befüllbar ist;
- eine Katholytfüllöffnung (86), über die der mindestens eine Katholyttank (66) mit einem flüssigen, aufgeladenen Katholyt befüllbar ist;
- eine Anolytentfernungsvorrichtung (88), über die entladener Anolyt aus dem mindestens einen Anolyttank (64; 68) entfernt werden kann; und
- eine Katholytentfernungsvorrichtung (90), über die entladener Katholyt aus dem mindestens einen Katholyttank (66; 70) entfernt werden kann;
- mindestens eine Anolytleitung (92), die den mindestens einen Anolyttank (64; 64, 68) mit der Anodenkammer (74) verbindet;
- mindestens eine Katholytleitung (94), die den mindestens einen Katholyttank (66; 66, 70) mit der Kathodenkammer (78) verbindet;
- mindestens eine Anolytpumpe (96), die in der Anolytleitung (92) beinhaltet ist und mit deren Hilfe der Anolyt aus dem mindestens einen Anolyttank (64) über die Anodenkammer (74) der Flow-Batterie (72) zu einem des mindestens einen Anolyttanks (64; 68) pumpbar ist; und
- mindestens eine Katholytpumpe (98), die in der Katholytleitung (94) beinhaltet ist und mit deren Hilfe der Katholyt aus dem mindestens einen Katholyttank (66) über die Kathodenkammer (78) der Flow-Batterie (72) zu einem des mindestens einen Katholyttanks (66; 70) pumpbar ist;
- mindestens einen Elektromotor (100) zum Antreiben mindestens einer Schraube des Schiffs (60), wobei der Elektromotor (100) mit der Flow-Batterie (72) verbunden ist.

2. Schifffahrtssystem nach Anspruch 1, wobei der mindestens eine Anolyttank (14; 18) des Energiespeicherpontons (10) Folgendes umfasst:
- mindestens einen ersten Anolyttank (14) zum Aufnehmen flüssigen, entladenen Anolyts;
- mindestens einen zweiten Anolyttank (18) zum Aufnehmen flüssigen, aufgeladenen Anolyts;
und wobei der mindestens eine Katholyttanks (16, 20) des Energiespeicherpontons (10) Folgendes umfasst:
- mindestens einen ersten Katholyttank (16) zum Aufnehmen flüssigen, entladenen Katholyts;
- mindestens einen zweiten Katholyttank (20) zum Aufnehmen flüssigen, aufgeladenen Katholyts;
wobei die Anolytfüllöffnung (34) mit dem mindestens einen ersten Anolyttank (14) verbunden ist, der mit einem flüssigen entladenen Anolyt befüllbar ist;
wobei die Katholytfüllöffnung (36) mit dem mindestens einen ersten Katholyttank (16) verbunden ist, der mit einem flüssigen, entladenen Katholyt befüllbar ist;
wobei die Anolytabgabevorrichtung (38) mit dem mindestens einen zweiten Anolyttank (18) verbunden ist; und
wobei die Kathodenabgabevorrichtung (40) mit dem mindestens einen zweiten Katholyttank (20) verbunden ist;
wobei die mindestens eine Anolytleitung (42) den mindestens einen ersten Anolyttank (14) über die Anodenkammer (24) mit dem mindestens einen zweiten Anolyttank (18) verbindet;
wobei die mindestens eine Katholytleitung (44) den mindestens einen ersten Katholyttank (16) über die Kathodenkammer (28) mit dem mindestens einen zweiten Katholyttank (20) verbindet;
wobei mit Hilfe der mindestens einen Anolytpumpe (46) Anolyt aus dem mindestens einen ersten Anolyttank (14) über die Anodenkammer (24) der Flow-Batterie (22) zu dem mindestens einen zweiten Anolyttank (18) pumpbar ist;
wobei mit Hilfe der mindestens einen Katholytpumpe (48) Katholyt aus dem mindestens einen ersten Katholyttank (16) über die Kathodenkammer (28) der Flow-Batterie (22) zu dem mindestens einen zweiten Katholyttank (20) pumpbar ist.

3. Schifffahrtssystem nach Anspruch 1 oder 2, wobei der mindestens eine Anolyttank (14; 14, 18) des Energiespeicherpontons (10) und der mindestens eine Katholyttank (16; 16, 20) des Energiespeicherpontons (10) an einer Innenseite mit einer Beschichtung, beispielsweise einer dielektrischen Beschichtung, versehen sind.

4. Schifffahrtssystem nach Anspruch 1 oder 2, wobei der mindestens eine Anolyttank (14; 14, 18) und der mindestens eine Katholyttank (16; 16, 20) des Energiespeicherpontons (10) aus Kunststoff hergestellt sind.

5. Schifffahrtssystem nach Anspruch 4, wobei der Kunststoff dielektrisch ist.

6. Schifffahrtssystem nach einem der Ansprüche 1 bis 5, wobei der mindestens eine Anolyttank des Schiffs Folgendes umfasst:
- mindestens einen ersten Anolyttank (64) zum Aufnehmen flüssigen, aufgeladenen Anolyts;
- mindestens einen zweiten Anolyttank (68) zum Aufnehmen flüssigen, entladenen Anolyts;
und wobei der mindestens eine Katholyttank des Schiffs Folgendes umfasst:
- mindestens einen ersten Katholyttank (66) zum Aufnehmen flüssigen, aufgeladenen Katholyts;
- mindestens einen zweiten Katholyttank (70) zum Aufnehmen flüssigen, entladenen Katholyts;
wobei die Anolytfüllöffnung (84) des Schiffs mit dem mindestens einen ersten Anolyttank (64) des Schiffs verbunden ist, der mit einem flüssigen aufgeladenen Anolyt befüllbar ist;
wobei die Katholytfüllöffnung (86) des Schiffs mit dem mindestens einen ersten Katholyttank (66) des Schiffs verbunden ist, der mit einem flüssigen aufgeladenen Katholyt befüllbar ist;
wobei die Anolytentfernungsvorrichtung (88) mit dem mindestens einen zweiten Anolyttank (68) des Schiffs verbunden ist, wobei mit Hilfe der Anolytentfernungsvorrichtung (88) entladener Anolyt aus dem mindestens einen zweiten Anolyttank (68) des Schiffs entfernt werden kann; und
wobei die Katholytentfernungsvorrichtung (90) mit dem zweiten Katholyttank (70) des Schiffs verbunden ist, wobei mit Hilfe der Katholytentfernungsvorrichtung (90) entladener Katholyt aus dem mindestens einen zweiten Katholyttank (70) des Schiffs entfernt werden kann;
wobei die mindestens eine Anolytleitung (92) den mindestens einen ersten Anolyttank (64) über die Anodenkammer (74) mit dem mindestens einen zweiten Anolyttank (68) des Schiffs verbindet;
wobei die mindestens eine Katholytleitung (94) den mindestens einen ersten Katholyttank (66) über die Kathodenkammer (78) mit dem mindestens einen zweiten Katholyttank (70) des Schiffs verbindet;
wobei mit Hilfe der mindestens einen Anolytpumpe (96) Anolyt aus dem mindestens einen ersten Anolyttank (64) über die Anodenkammer (74) der Flow-Batterie (72) zu dem mindestens einen zweiten Anolyttank (68) des Schiffs pumpbar ist; und
wobei mit Hilfe der mindestens einen Katholytpumpe (98) Katholyt aus dem mindestens einen ersten Katholyttank (66) über die Kathodenkammer (78) der Flow-Batterie (72) zu dem mindestens einen zweiten Katholyttank (70) pumpbar ist.

7. Schifffahrtssystem nach einem der Ansprüche 1 bis 6, wobei der mindestens eine Anolyttank (64; 64, 68) des Schiffs und der mindestens eine Katholyttank (66; 66, 70) des Schiffs an einer Innenseite mit einer Beschichtung, beispielsweise einer dielektrischen Beschichtung, versehen sind.

8. Schifffahrtssystem nach einem der Ansprüche 1 bis 7, wobei der mindestens eine Anolyttank (64; 64, 68) und der mindestens eine Katholyttank (66; 66, 70) aus Kunststoff hergestellt sind.

9. Schifffahrtssystem nach Anspruch 8, wobei der Kunststoff dielektrisch ist.

10. Schifffahrtssystem nach einem der Ansprüche 1 bis 9, wobei das Schiff (60) mit einer Verbindung (102) zum elektrischen Verbinden der Flow-Batterie (72) des Schiffs (60) mit einer Stromquelle (P) und/oder einem Stromverbraucher (L) versehen ist.

11. Schifffahrtssystem nach einem der Ansprüche 1 bis 10, wobei das Schiff ein Binnenschiff (60) ist.

12. Schifffahrtssystem nach einem der Ansprüche 1 bis 11, wobei das mindestens eine Schiff mindestens zwei Schiffe umfasst, von welchen mindestens ein Schiff ein Bunkerschiff (110) ist, wobei das Bunkerschiff (110) Folgendes umfasst:
- einen Bunkerschiff-Versorgungstank (112) zum Aufnehmen aufgeladenen Anolyts,
- einen Bunkerschiff-Versorgungstank (114) zum Aufnehmen aufgeladenen Katholyts,
- einen Bunkerschiff-Versorgungstank (116) zum Aufnehmen entladenen Anolyts, und
- einen Bunkerschiff-Versorgungstank (118) zum Aufnehmen entladenen Katholyts.

13. Schifffahrtssystem nach Anspruch 12, wobei das Schifffahrtssystem (110) Folgendes umfasst:
- eine Anolytabgabevorrichtung, die eine zweite Anolytleitung (120) und eine zweite Anolytpumpe (122) zum Pumpen aufgeladenen Anolyts aus dem Bunkerschiff-Versorgungstank (112) für aufgeladenen Anolyt zu einem Anolyttank (64) für einen Benutzer umfasst.
- eine Katholytabgabevorrichtung, die eine zweite Katholytleitung (124) und eine zweite Katholytpumpe (126) zum Pumpen aufgeladenen Katholyts aus dem Bunkerschiff-Versorgungstank (114) für aufgeladenen Katholyt zu einem Katholyttank (66) eines Benutzers umfasst.

14. Schifffahrtssystem nach Anspruch 13, wobei das Bunkerschiff (110) Folgendes umfasst:
- eine Anolytempfangsvorrichtung, die eine dritte Anolytleitung (128) und eine dritte Anolytpumpe (130) zum Pumpen entladenen Anolyts aus einem Anolyttank eines Benutzers zu dem Bunkerschiff-Versorgungstank (116) für entladenen Anolyts umfasst; und
- eine Katholytempfangsvorrichtung, die eine dritte Katholytleitung (132) und eine dritte Katholytpumpe (134) zum Pumpen entladenen Katholyts aus einem Katholyttank eines Benutzers zu dem Bunkerschiff-Versorgungstank (118) für entladenen Katholyt umfasst.

15. Schifffahrtbetriebsverfahren, wobei das Verfahren zum Zweck des Aufladens des Anolyts und des Katholyts Folgendes umfasst:
- das Bereitstellen eines erfindungsgemäßen Schifffahrtssystems nach einem der Ansprüche 1 bis 14, wobei von dem Energiespeicherponton (10) der mindestens eine Anolyttank (14; 14, 18) mindestens teilweise mit flüssigen Anolyt befüllt wird, und wobei der mindestens eine Katholyttank (16; 16, 20) mindestens teilweise mit flüssigem Katholyt befüllt wird;
- das Verbinden der Stromverbindung (50) des Energiespeicherpontons (10) mit einer Stromquelle (P);
- mit Hilfe der Anolytpumpe (46), das Pumpen von Anolyt aus dem mindestens einen Anolyttank (14) über die Anodenkammer (24) der mindestens einen Flow-Batterie (22) zu einem des mindestens einen Anolyttanks (14; 18);
- mit Hilfe der Katholytpumpe (48), das Pumpen von Katholyt aus dem mindestens einen Katholyttank (16) über die Kathodenkammer (28) der mindestens einen Flow-Batterie (22) zu einem des mindestens einen Katholyttanks (16; 20).

16. Verfahren nach Anspruch 15, wobei das Verfahren zum Zweck des Zuführens von elektrischem Strom Folgendes umfasst:
- das Verbinden der Stromverbindung (50) des Energiespeicherpontons (10) mit einem Stromverbraucher (L);
- mit Hilfe der Anolytpumpe (46), das Pumpen von Anolyt aus dem mindestens einen Anolyttank (14) über die Anodenkammer (24) der mindestens einen Flow-Batterie (22) zu einem des mindestens einen Anolyttanks (14; 18);
- mit Hilfe der Katholytpumpe (48), das Pumpen von Katholyt aus dem mindestens einen Katholyttank (16) über die Kathodenkammer (28) der mindestens einen Flow-Batterie (22) zu einem des mindestens einen Katholyttanks (16; 20).

17. Verfahren nach Anspruch 15 oder 16, wobei das Schifffahrtssystem nach Anspruch 2 implementiert wird, wobei der mindestens eine erste Anolyttank (14) des Energiespeicherpontons (10) mindestens teilweise mit flüssigem, entladenem Anolyt, befüllt wird, der mindestens eine erste Katholyttank (16) des Energiespeicherpontons (10) mindestens teilweise mit flüssigem, entladenem Katholyt befüllt wird, der mindestens eine zweite Anolyttank (18) des Energiespeicherpontons (10) mindestens teilweise mit flüssigem, aufgeladenem Anolyt befüllt wird, und der mindestens eine zweite Katholyttank (20) des Energiespeicherponton (10) mindestens teilweise mit flüssigem, aufgeladenem Katholyt befüllt wird;
wobei das Verfahren Folgendes umfasst:
- mit Hilfe der Anolytpumpe (46), Pumpen entladenen Anolyts aus dem ersten Anolyttank (14) über die Anodenkammer (24) der mindestens einen Flow-Batterie (22) zu dem zweiten Anolyttank (18), wenn über die Stromverbindung (50) elektrischer Strom von der Stromquelle (P) verfügbar ist;
- mit Hilfe der Katholytpumpe (48), Pumpen entladenen Katholyts aus dem ersten Katholyttank (16) über die Kathodenkammer (28) der mindestens einen Flow-Batterie (22) zu dem zweiten Katholyttank (20), wenn über die Stromverbindung (50) elektrischer Strom von der Stromquelle (P) verfügbar ist.

18. Verfahren nach Anspruch 17, das ferner Folgendes umfasst:
- mit Hilfe der Anolytpumpe (46) des Energiespeicherpontons (10), Pumpen aufgeladenen Anolyts aus dem zweiten Anolyttank (18) über die Anodenkammer (24) der mindestens einen Flow-Batterie (22) zu dem ersten Anolyttank (14) des Energiespeicherpontons (10), wenn Strom über die Stromverbindung (50) von dem Stromverbraucher (L) verlangt wird;
- mit Hilfe der Katholytpumpe (48) des Energiespeicherpontons (10), Pumpen aufgeladenen Katholyts aus dem zweiten Anolyttank (20) über die Kathodenkammer (28) der mindestens einen Flow-Batterie (22) zu dem ersten Katholyttank (16) des Energiespeicherpontons (10), wenn elektrischer Strom über die Stromverbindung (50) von dem Stromverbraucher (L) verlangt wird.

19. Verfahren nach einem der Ansprüche 15 bis 18, das ferner Folgendes umfasst:
- über die Anolytabgabevorrichtung (38), Zuführen aufgeladenen Anolyts zu einem Anolyttank (64) eines Schiffs (60) oder zu einem Bunkerschiff-Versorgungstank (112) für aufgeladenen Anolyt;
- über die Kathodenabgabevorrichtung (40), Zuführen aufgeladenen Katholyts zu einem Katholyttank (66) eines Schiffs (60) oder zu einem Bunkerschiff-Versorgungstank (114) für aufgeladenen Katholyt.

20. Verfahren nach einem der Ansprüche 15 bis 19, das ferner Folgendes umfasst:
- über die Anolytfüllöffnung (34), Einspeisen entladenen Anolyts zu dem mindestens einen Anolyttank (14) des Energiespeicherpontons (10); und
- über die Katholytfüllöffnung (36), Einspeisen entladenen Katholyts zu dem mindestens einen Katholyttank (16) des Energiespeicherpontons (10).

21. Verfahren nach einem der Ansprüche 15 bis 20, wobei das Schifffahrtssystem einem der Ansprüche 13-14 entspricht, einschließlich des Verwendens des Bunkerschiffs (110), wobei das Verfahren ferner Folgendes umfasst:
- mit Hilfe der zweiten Anolytpumpe (122), über die zweite Anolytleitung (120), Pumpen aufgeladenen Anolyts aus dem Bunkerschiff-Versorgungstank (112) zu dem Anolyttank (64) eines Schiffs (60) des Schifffahrtssystems; und
- mit Hilfe der zweiten Katholytpumpe (126), über die zweite Katholytleitung (124), Pumpen aufgeladenen Katholyts aus dem Bunkerschiff-Versorgungstank (114) für aufgeladenen Katholyt zu dem Katholyttank (66) eines Schiffs (60) des Schifffahrtssystems.

22. Verfahren nach einem der Ansprüche 15 bis 21, wobei das Schifffahrtssystem Anspruch 14 entspricht, einschließlich des Verwendens des Bunkerschiffs (110), wobei das Verfahren ferner Folgendes umfasst:
- mit Hilfe der dritten Anolytpumpe (130), über die dritte Anolytleitung (128), Pumpen entladenen Anolyts aus dem Anolyttank (64) oder (68) des Schiffs (60) zu dem Bunkerschiff-Versorgungstank (116) für entladenen Anolyt;
- mit Hilfe der dritten Katholytpumpe (134), über die dritte Katholytleitung (132), Pumpen entladenen Katholyts aus dem Katholyttank (66 oder 70) des Schiffs (60) zu dem Bunkerschiff-Versorgungstank (118) für entladenen Katholyt.

## Revendications

1. Système de transport par navire comprenant :
- au moins un ponton de stockage d'énergie (10) et
- au moins un navire (60) ;
le au moins un ponton de stockage d'énergie (10) du système de transport par navire comprenant :
- une coque de ponton flottant (12) avec:
• au moins un réservoir d'anolyte (14 ; 14, 18) destiné à contenir de l'anolyte liquide ;
• au moins un réservoir de catholyte (16 ; 16, 20) pour contenir un catholyte liquide ;
dans lequel le ponton de stockage d'énergie comprend en outre
- au moins une batterie à circulation (22) comportant :
• une chambre anodique (24) munie d'une anode (26);
• une chambre cathodique (28) munie d'une cathode (30);
• une membrane (32) qui sépare la chambre anodique (24) de la chambre cathodique (28);
dans lequel le ponton de stockage d'énergie (10) est en outre pourvu de :
- une ouverture de remplissage d'anolyte (34) par lequel l'au moins un réservoir d'anolyte (14 ; 14, 18) peut être rempli de l'anolyte liquide déchargé ;
- une ouverture de remplissage de catholyte (36) par lequel l'au moins un réservoir de catholyte (16 ; 16, 20) peut être rempli d'un catholyte liquide déchargé ;
- un moyen de fourniture de distribution d'anolyte (38) par l'intermédiaire de lequel l'anolyte chargé peut être distribué à partir de l'au moins un réservoir d'anolyte (14; 18); et
- un moyen de fourniture de catholyte (40) par l'intermédiaire duquel le catholyte chargé peut être fourni à partir de l'au moins un réservoir de catholyte (16 ; 20) ;
- au moins une conduite d'anolyte (42) qui relie l'au moins un réservoir d'anolyte (14 ; 14, 18) à la chambre anodique (24);
- au moins une conduite de catholyte (44) qui relie l'au moins un réservoir de catholyte (16 ; 16, 20) à la chambre cathodique (28);
- au moins une pompe à anolyte (46), qui est incluse dans la conduite d'anolyte (42) et à l'aide de lequel l'anolyte peut être pompé depuis l'au moins un réservoir d'anolyte (14) par l'intermédiaire de la chambre anodique (24) de la batterie à circulation (22) vers l'au moins un réservoir d'anolyte (14 ; 18) ;
- au moins une pompe à catholyte (48) qui est incluse dans la ligne de catholyte (44) et à l'aide de lequel le catholyte peut être pompé depuis l'au moins un réservoir de catholyte (16) via la chambre cathodique (28) de la batterie à circulation (22) vers l'au moins un réservoir de catholyte (16 ; 20) ; et
- au moins une connexion électrique (50) pour connecter électriquement la batterie à circulation (22) à une source électrique (P) et/ou une charge électrique (L) ;
dans lequel l'au moins un ponton de stockage d'énergie est connecté à une source électrique (P), par l'intermédiaire de l'au moins une connexion électrique (50) comme par exemple le réseau électrique, la source électrique (P) étant par exemple le secteur ou une centrale électrique, et
dans lequel l'au moins un navire du système de transport par navire comprend
- une coque (62) avec :
• au moins un réservoir d'anolyte (64 ; 64, 68) pour contenir de l'anolyte liquide;
• au moins un réservoir de catholyte (66 ; 66, 70) pour contenir un catholyte liquide ;
dans lequel le navire (60) comprend en outre
- au moins une batterie à circulation (72) comportant :
• une chambre anodique (74) munie d'une anode (76) ;
• une chambre cathodique (78) munie d'une cathode (80);
• une membrane (82) qui sépare la chambre anodique (74) de la chambre cathodique (78) ;
dans lequel le navire est en outre pourvu de :
- une ouverture de remplissage d'anolyte (84) par lequel l'au moins un réservoir d'anolyte (64) peut être rempli avec de l'anolyte liquide chargé ;
- une ouverture de remplissage de catholyte (86) par lequel l'au moins un réservoir de catholyte (66) peut être rempli avec un catholyte liquide chargé ;
- une disposition d'enlèvement d'anolyte (88) par lequel l'anolyte déchargé peut être éliminé de l'au moins un réservoir d'anolyte (64 ; 68) ; et
- un moyen d'enlèvement de catholyte (90) par lequel le catholyte déchargé peut être éliminé de l'au moins un réservoir de catholyte (66 ; 70);
- au moins une ligne d'anolyte (92) qui relie l'au moins un réservoir d'anolyte (64 ; 64, 68) à la chambre anodique (74);
- au moins une conduite de catholyte (94) qui relie l'au moins un réservoir de catholyte (66 ; 66, 70) à la chambre cathodique (78) ;
- au moins une pompe à anolyte (96) qui est incluse dans la conduite d'anolyte (92) et à l'aide de lequel l'anolyte peut être pompé depuis l'au moins un réservoir d'anolyte (64) via la chambre anodique (74) de la batterie à circulation (72) vers l'un de l'au moins un réservoir d'anolyte (64 ; 68) ; et
- au moins une pompe à catholyte (98) qui est incluse dans la ligne de catholyte (94) et à l'aide de laquelle le catholyte est pompable depuis l'au moins un réservoir de catholyte (66) via la chambre cathodique (78) de la batterie à circulation (72) vers l'un de l'au moins un réservoir de catholyte (66 ; 70);
- au moins un moteur électrique (100) pour entraîner au moins une vis du navire (60), dans lequel le moteur électrique (100) est relié à la batterie à circulation (72).

2. Système de transport par navire selon la revendication 1, dans lequel l'au moins un réservoir d'anolyte (14, 18) du ponton de stockage d'énergie (10) comprend:
- au moins un premier réservoir d'anolyte (14) pour contenir de l'anolyte liquide déchargé ;
- au moins un deuxième réservoir d'anolyte (18) pour contenir l'anolyte liquide chargé;
et dans lequel l'au moins un réservoir de catholyte (16, 20) du ponton de stockage d'énergie (10) comprend :
- au moins un premier réservoir de catholyte (16) pour contenir du catholyte liquide déchargé ;
- au moins un deuxième réservoir de catholyte (20) pour contenir du catholyte liquide, chargé ;
dans lequel l'ouverture de remplissage d'anolyte (34) est reliée à l'au moins un premier réservoir d'anolyte (14) qui peut être rempli avec de l'anolyte liquide déchargé;
dans lequel l'ouverture de remplissage de catholyte (36) est reliée à l'au moins un premier réservoir de catholyte (16) qui peut être rempli avec un catholyte liquide déchargé ;
dans lequel le moyen de fourniture d'anolyte (38) est relié à l'au moins un deuxième réservoir d'anolyte (18) ; et
dans lequel le moyen de fourniture de catholyte (40) est connecté à l'au moins un deuxième réservoir de catholyte (20);
dans lequel l'au moins une conduite d'anolyte (42) relie l'au moins un premier réservoir d'anolyte (14) via la chambre anodique (24) à l'au moins un deuxième réservoir d'anolyte (18);
dans lequel l'au moins une conduite de catholyte (44) relie l'au moins un premier réservoir de catholyte (16) via la chambre cathodique (28) à l'au moins un deuxième réservoir de catholyte (20);
dans lequel l'anolyte peut être pompé à l'aide de la au moins une pompe à anolyte (46) depuis le au moins un premier réservoir d'anolyte (14) via la chambre anodique (24) de la batterie à circulation (22) vers le au moins un deuxième réservoir d'anolyte (18);
dans lequel à l'aide de l'au moins une pompe à catholyte (48), le catholyte peut être pompé depuis l'au moins un premier réservoir à catholyte (16) via la chambre cathodique (28) de la batterie à circulation (22) vers l'au moins un deuxième réservoir à catholyte (20).

3. Système de transport par navire selon la revendication 1 ou 2, dans lequel l'au moins un réservoir d'anolyte (14 ; 14, 18) du ponton de stockage d'énergie (10), et l'au moins un réservoir de catholyte (16 ; 16, 20) sont pourvus sur un côté intérieur d'un revêtement, par exemple un revêtement diélectrique.

4. Système de transport par navire selon la revendication 1 ou 2, dans lequel l'au moins un réservoir d'anolyte (14 ; 14, 18) et l'au moins un réservoir de catholyte (16 ; 16, 20) du ponton de stockage d'énergie (10) sont réalisés en plastique.

5. Système de transport par navire selon la revendication 4, dans lequel le plastique est diélectrique.

6. Système de transport par navire selon l'une des revendications 1 à 5, dans lequel l'au moins un réservoir d'anolyte du navire comprend :
- au moins un premier réservoir d'anolyte (64) pour contenir de l'anolyte liquide chargé ;
- au moins un deuxième réservoir d'anolyte (68) pour contenir de l'anolyte liquide déchargé ;
et dans lequel l'au moins un réservoir de catholyte du navire comprend :
- au moins un premier réservoir de catholyte (66) pour contenir un catholyte liquide chargé ;
- au moins un deuxième réservoir de catholyte (70) pour contenir du catholyte liquide déchargé ;
dans lequel l'ouverture de remplissage d'anolyte (84) du navire est reliée à l'au moins un premier réservoir d'anolyte (64) du navire qui peut être rempli avec de l'anolyte liquide chargé;
dans lequel l'ouverture de remplissage de catholyte (86) du navire est reliée à l'au moins un premier réservoir de catholyte (66) du navire qui peut être rempli avec un catholyte liquide chargé;
dans lequel le moyen d'enlèvement d'anolyte (88) est relié à l'au moins un deuxième réservoir d'anolyte (68) du navire, dans lequel à l'aide du moyen d'enlèvement d'anolyte (88), l'anolyte déchargé peut être éliminé de l'au moins un deuxième réservoir d'anolyte (68) du navire ; et
dans lequel le moyen d'enlèvement de catholyte (90) est connecté au deuxième réservoir de catholyte (70), dans lequel à l'aide du moyen d'enlèvement de catholyte (90) le catholyte déchargé peut être éliminé de l'au moins un deuxième réservoir de catholyte (70) du navire;
dans lequel l'au moins une conduite d'anolyte (92) relie l'au moins un premier réservoir d'anolyte (64) via la chambre anodique (74) à l'au moins un deuxième réservoir d'anolyte (68) du navire ;
dans lequel l'au moins une conduite de catholyte (94) relie l'au moins un premier réservoir de catholyte (66) via la chambre cathodique (78) à l'au moins un deuxième réservoir de catholyte (70) du navire ;
dans lequel à l'aide de la au moins une pompe à anolyte (96), l'anolyte peut être pompé depuis le au moins un premier réservoir d'anolyte (64) via la chambre anodique (74) de la batterie à circulation (72) vers le au moins un deuxième réservoir d'anolyte (68) du navire; et
dans lequel à l'aide de l'au moins une pompe à catholyte (98), le catholyte peut être pompé depuis l'au moins un premier réservoir à catholyte (66) via la chambre cathodique (78) de la batterie à circulation (72) vers l'au moins un deuxième réservoir à catholyte (70) du navire.

7. Système de transport par navire selon l'une des revendications 1 à 6, dans lequel l'au moins un réservoir d'anolyte (64 ; 64, 68) et l'au moins un réservoir de catholyte (66 ; 66, 70) du navire sont pourvus sur un côté intérieur d'un revêtement, par exemple un revêtement diélectrique.

8. Système de transport par navire selon l'une des revendications 1 à 7, dans lequel l'au moins un réservoir d'anolyte (64 ; 64, 68) et l'au moins un réservoir de catholyte (66 ; 66, 70) sont réalisés en plastique.

9. Système de transport par navire selon la revendication 8, dans lequel le plastique est diélectrique.

10. Système de transport par navire selon l'une des revendications 1 à 9, dans lequel le navire (60) est pourvu d'une connexion (102) pour connecter électriquement la batterie à circulation (72) du navire (60) à une source électrique (P) et/ou une charge électrique (L).

11. Système de transport par navire selon l'une des revendications 1 à 10 dans lequel le navire est un navire de navigation fluviale (60).

12. Système de transport par navire selon l'une des revendications 1 à 11, dans lequel l'au moins un navire comprend au moins deux navires, dont au moins un des navires est un navire souteneur (110), dans lequel le navire souteneur (110) comprend:
- un réservoir d'alimentation de navire souteneur (112) pour contenir l'anolyte chargé,
- un réservoir d'alimentation de navire souteneur (114) pour contenir le catholyte chargé,
- un réservoir d'alimentation de navire souteneur (116) pour contenir l'anolyte déchargé, et
- un réservoir d'alimentation de navire souteneur (118) pour contenir le catholyte déchargé,

13. Système de transport par navire selon la revendication 12, dans lequel le navire souteneur (110) comprend :
- un dispositif de distribution d'anolyte qui comprend une deuxième conduite d'anolyte (120) et une deuxième pompe à anolyte (122) pour pomper l'anolyte chargé du réservoir d'alimentation de navire souteneur (112) pour amener l'anolyte chargé à un réservoir d'anolyte (64) d'un utilisateur ;
- un dispositif de distribution de catholyte qui comprend une deuxième conduite de catholyte (124) et une deuxième pompe à catholyte (126) pour pomper le catholyte chargé depuis le réservoir d'alimentation de navire souteneur (114) pour le catholyte chargé vers un réservoir de catholyte (66) d'un utilisateur.

14. Système de transport par navire selon la revendication 13, dans lequel le navire souteneur (110) comprend :
- un dispositif de réception d'anolyte qui comprend une troisième conduite d'anolyte (128) et une troisième pompe à anolyte (130) pour pomper l'anolyte déchargé d'un réservoir d'anolyte d'un utilisateur vers le réservoir d'alimentation de navire souteneur (116) pour l'anolyte déchargé ; et
- un dispositif de réception de catholyte qui comprend une troisième ligne de catholyte (132) et une troisième pompe à catholyte (134) pour pomper le catholyte déchargé d'un réservoir de catholyte d'un utilisateur vers le réservoir d'alimentation de navire souteneur (118) pour le catholyte déchargé.

15. Procédé pour l'exploitation de transport par navire, dans lequel le procédé comprend, dans le but de charger l'anolyte et le catholyte les étapes consistant à :
- fournir un système de transport par navire selon l'une quelconque des revendications 1 à 14, dans lequel, du ponton de stockage d'énergie (10), l'au moins un réservoir d'anolyte (14 ; 14, 18) est au moins partiellement rempli d'anolyte liquide, et dans lequel l'au moins un réservoir de catholyte (16 ; 16, 20) est au moins partiellement rempli de catholyte liquide ;
- connecter la connexion électrique (50) du ponton de stockage d'énergie (10) à une source électrique (P);
- à l'aide de la pompe à anolyte (46), pomper l'anolyte depuis l'au moins un réservoir d'anolyte (14) via la chambre anodique (24) de l'au moins une batterie à circulation (22) vers l'un de l'au moins un réservoir d'anolyte (14 ; 18);
- à l'aide de la pompe à catholyte (48), pomper le catholyte depuis l'au moins un réservoir de catholyte (16) via la chambre cathodique (28) de l'au moins une batterie à circulation (22) vers l'un de l'au moins un réservoir de catholyte (16 ; 20).

16. Procédé selon la revendication 15, dans lequel le procédé destiné à fournir de l'énergie électrique comprend les étapes consistant à :
- connecter la connexion électrique (50) du ponton de stockage d'énergie (10) à une charge électrique (L) ;
- à l'aide de la pompe à anolyte (46), pomper l'anolyte depuis l'au moins un réservoir d'anolyte (14) via la chambre anodique (24) de l'au moins une batterie à circulation (22) vers l'un de l'au moins un réservoir d'anolyte (14 ; 18);
- à l'aide de la pompe à catholyte (48), pomper le catholyte depuis l'au moins un réservoir de catholyte (16) via la chambre cathodique (28) de l'au moins une batterie à circulation (22) vers l'un de l'au moins un réservoir de catholyte (16 ; 20).

17. Procédé selon la revendication 15 ou 16, dans lequel le système de transport par navire est mis en oeuvre selon la revendication 2, dans lequel l'au moins un premier réservoir d'anolyte (14) du ponton de stockage d'énergie (10) est au moins partiellement rempli d'anolyte liquide déchargé, l'au moins un premier réservoir de catholyte (16) du ponton de stockage d'énergie (10) est au moins partiellement rempli de catholyte liquide déchargé, l'au moins un deuxième réservoir d'anolyte (18) du ponton de stockage d'énergie (10) est au moins partiellement rempli d'anolyte liquide chargé, et l'au moins un deuxième réservoir de catholyte (20) du ponton de stockage d'énergie (10) est au moins partiellement rempli de catholyte liquide chargé; dans lequel le procédé comprend :
- à l'aide de la pompe à anolyte (46), le pompage de l'anolyte déchargé du premier réservoir d'anolyte (14) via la chambre anodique (24) de l'au moins une batterie à circulation (22) vers le deuxième réservoir d'anolyte (18) lorsque via la connexion électrique (50) de l'énergie électrique est disponible depuis la source électrique (P);
- à l'aide de la pompe à catholyte (48), le pompage du catholyte déchargé du premier réservoir de catholyte (16) via la chambre cathodique (28) de l'au moins une batterie à circulation (22) vers le deuxième réservoir de catholyte (20) lorsque via la connexion électrique (50) de l'énergie électrique est disponible depuis la source électrique (P).

18. Procédé selon la revendication 17, comprenant en outre :
- à l'aide de la pompe à anolyte (46) du ponton de stockage d'énergie (10), le pompage de l'anolyte chargé depuis le deuxième réservoir d'anolyte (18) via la chambre anodique (24) de l'au moins une batterie à circulation (22) vers le premier réservoir d'anolyte (14) du ponton de stockage d'énergie (10) lorsque l'alimentation électrique via la connexion électrique (50) est demandée par la charge électrique (L);
- à l'aide de la pompe à catholyte (48) du ponton de stockage d'énergie (10), le pompage du catholyte chargé depuis le deuxième réservoir d'anolyte (20) via la chambre cathodique (28) de l'au moins une batterie à circulation (22) vers le premier réservoir de catholyte (16) du ponton de stockage d'énergie (10) lorsque l'énergie électrique via la connexion électrique (50) est demandée par la charge électrique (L).

19. Procédé selon l'une quelconque des revendications 15 à 18, comprenant en outre les étapes consistant à :
- par l'intermédiaire du moyen de fourniture d'anolyte (38), fournir l'anolyte chargé à un réservoir d'anolyte (64) d'un navire (60), ou à un réservoir d'alimentation de navire souteneur (112) pour l'anolyte chargé ;
- par l'intermédiaire du moyen de fourniture de catholyte (40), fournir le catholyte chargé à un réservoir de catholyte (66) d'un navire (60), ou à un réservoir d'alimentation de navire souteneur (114) pour le catholyte chargé.

20. Procédé selon l'une quelconque des revendications 15 à 19, comprenant en outre les étapes consistant à :
- via l'ouverture de remplissage d'anolyte (34), alimenter en anolyte déchargé de l'au moins un réservoir d'anolyte (14) du ponton de stockage d'énergie (10) ; et
- via l'ouverture de remplissage de catholyte (36), alimenter le catholyte déchargé vers l'au moins un réservoir de catholyte (16) du ponton de stockage d'énergie (10).

21. Procédé selon l'une quelconque des revendications 15 à 20, dans lequel le système de transport par navire est selon l'une quelconque des revendications 13 à 14, comprenant l'utilisation d'un navire souteneur (110) dans lequel le procédé comprend en outre :
- à l'aide de la deuxième pompe à anolyte (122), via la deuxième ligne d'anolyte (120), le pompage de l'anolyte chargé depuis le réservoir d'alimentation de navire souteneur (112) vers ledit réservoir d'anolyte (64) d'un navire (60) du système de transport par navire ; et
- à l'aide de la deuxième pompe à catholyte (126), via la deuxième ligne de catholyte (124), le pompage du catholyte chargé depuis le réservoir d'alimentation de navire souteneur (114) pour le catholyte chargé vers ledit réservoir de catholyte (66) d'un navire (60) du système de transport par navire.

22. Procédé selon l'une quelconque des revendications 15 à 21, dans lequel le système de transport par navire est selon la revendication 14, comprenant l'utilisation d'un navire souteneur (110), dans lequel le procédé comprend en outre :
- à l'aide de la troisième pompe à anolyte (130), via la troisième ligne d'anolyte (128), le pompage de l'anolyte déchargé depuis un dit réservoir d'anolyte (64 ou 68) du navire (60) vers le réservoir d'alimentation de navire souteneur (116) pour l'anolyte déchargé ;
- à l'aide de la troisième pompe à catholyte (134), via la troisième ligne de catholyte (132), le pompage du catholyte déchargé depuis un dit réservoir de catholyte (66 ou 70) du navire (60) vers le réservoir d'alimentation de navire souteneur (118) pour le catholyte déchargé.
